(19) Europäisches Patentamt
European Patent Office
Office européen des brevets

(11) **EP 4 642 089 A2**

(12) **EUROPEAN PATENT APPLICATION**
published in accordance with Art. 153(4) EPC

(43) Date of publication:
**29.10.2025 Bulletin 2025/44**

(21) Application number: **23914437.1**

(22) Date of filing: **28.11.2023**

(51) International Patent Classification (IPC):
*H04W 24/10* (2009.01)

(52) Cooperative Patent Classification (CPC):
**H04W 16/22; H04W 24/10; H04W 72/53**

(86) International application number:
**PCT/CN2023/134580**

(87) International publication number:
**WO 2024/146303 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 CN 202310020588**
**14.02.2023 CN 202310149561**

(71) Applicant: **Huawei Technologies Co., Ltd.**
**Shenzhen, Guangdong 518129 (CN)**

(72) Inventors:
• QIN, Cheng
**Shenzhen, Guangdong 518129 (CN)**
• WANG, Sihai
**Shenzhen, Guangdong 518129 (CN)**
• YANG, Rui
**Shenzhen, Guangdong 518129 (CN)**

(74) Representative: **Epping - Hermann - Fischer**
**Patentanwaltsgesellschaft mbH**
**Schloßschmidstraße 5**
**80639 München (DE)**

(54) **COMMUNICATION METHOD, NETWORK DEVICE, AND TERMINAL DEVICE**

(57) This application provides a communication method, including: A terminal device determines a quantity of AI resources needed for simultaneously running a first AI model and a second AI model at a first moment, where the first AI model is used to determine a first report, and the second AI model is used to determine a second report. The terminal device determines, based on a quantity of available AI resources at the first moment and the quantity of needed AI resources, that the first report is reported at a second moment. The terminal device reports a report to a network device in any one of the following manners: The terminal device reports the first report at the second moment, and reports the second report after the second moment; or reports the first report at the second moment, and does not report the second report at the second moment; or reports the first report and a third report at the second moment, where the third report is determined based on a non-AI model. For a report that cannot be reported, a processing manner of the terminal device is defined, to prevent the network device from incorrectly considering that the corresponding report cannot be received due to link quality or the like.

FIG. 2

**Description**

This application claims priorities to Chinese Patent Application No. 202310020588.6, filed with the China National Intellectual Property Administration on January 6, 2023 and entitled "AI CONFLICT PROCESSING METHOD, TERMINAL DEVICE, NETWORK DEVICE, AND COMMUNICATION SYSTEM", and to Chinese Patent Application No. 202310149561.7, filed with the China National Intellectual Property Administration on February 14, 2023 and entitled "COMMUNICATION METHOD, NETWORK DEVICE, AND TERMINAL DEVICE", both of which are incorporated herein by reference in their entireties.

**TECHNICAL FIELD**

Embodiments of this application relate to the communication field, and specifically, to a communication method, a network device, and a terminal device.

**BACKGROUND**

In a 5th generation (5th generation, 5G) system, related discussion on air interface artificial intelligence (artificial intelligence, AI) has been introduced. For example, AI is used to resolve problems such as channel state information (channel state information, CSI) feedback, beam management, and positioning. With a powerful learning capability of AI, better performance than an existing algorithm can be achieved. Therefore, different AI models may be used to replace conventional algorithm modules to resolve specific communication problems in the future. In conventional communication algorithm implementation, an algorithm on a terminal device side is generally executed on a general-purpose processor, for example, a central processing unit or a digital signal processor (Digital Signal Processor, DSP). AI model training or inference is a compute-intensive task, and therefore may be generally implemented by using a device with denser computing units, for example, a graphics processing unit (graphics processing unit, GPU) or a network processing unit (Network Processing Unit, NPU), to achieve higher computing efficiency. Therefore, an AI algorithm on the terminal device side applied to communication in the future may still use this mode and be executed on AI-dedicated hardware.

For a terminal device, communication-related calculation may overlap in time. For example, for a measurement resource, a related reporting amount reported to a network device needs to be calculated. Therefore, after AI is introduced, the terminal may need to simultaneously execute a plurality of AI models or functions. When the terminal device side needs to simultaneously run the plurality of AI models, but a capability of an AI processor of the terminal device is insufficient, how to define a running policy of the terminal device for the plurality of AI models becomes an urgent problem to be resolved.

**SUMMARY**

Embodiments of this application provide a communication method, to help define a processing policy of a terminal device when a plurality of AI models cannot be simultaneously run to obtain a plurality of reports, so as to prevent a network device from incorrectly considering that a corresponding report cannot be received due to link quality or the like.

According to a first aspect, a communication method is provided. The method may be performed by a terminal device, or may be performed by a component (for example, a chip or a circuit) of the terminal device. This is not limited in this application. For ease of description, the following uses an example in which the terminal device performs the method for description.

The communication method includes: The terminal device determines a quantity of AI resources needed for simultaneously running a first artificial intelligence AI model and a second AI model at a first moment, where the first AI model is used to determine a first report, and the second AI model is used to determine a second report. The terminal device determines, based on a quantity of available AI resources at the first moment and the quantity of needed AI resources, that the first report is reported at a second moment. The terminal device reports the first report at the second moment and reports the second report at a third moment after the second moment; the terminal device reports the first report at the second moment and does not report the second report at the second moment; or the terminal device reports the first report and a third report at the second moment, where the third report is determined based on a non-AI model, and the third report is related to the second report.

According to the foregoing technical solution, for the second report that cannot be obtained at the first moment based on the second AI model, a plurality of different processing policies of the terminal device are defined. The processing policies may be a delayed reporting (for example, the second report is obtained based on the second AI model after the first moment and is reported after the second moment), may be not reporting (for example, the terminal device does not report the second report), may be determining the third report at the first moment in another manner (for example, the third report is determined in a manner of determining based on the non-AI model, and is reported at the second moment), or the like. The plurality of different processing policies may be determined by the terminal device and a network device through negotiation, may be configured by the network device for the terminal device, or may be preconfigured in the terminal device and the network device. This can prevent the network device from incorrectly considering that a corresponding report cannot be received due to link quality or the like.

With reference to the first aspect, in some implementations of the first aspect, that the terminal device determines, based on a quantity of available AI resources at the first moment and the quantity of needed AI resources, that the first report is reported at a second moment includes: The terminal device determines, based on the quantity of available AI resources at the first moment and the quantity of needed AI resources, that the first report is reported at the second moment, and determines that the second report cannot be reported at the second moment.

According to the foregoing technical solution, the terminal device may determine, based on the quantity of available AI resources at the first moment and the quantity of AI resources needed for running the first AI model and the second AI model at the first moment, that the first AI model can be run at the first moment to obtain the first report, and that the second AI model cannot be run at the first moment to obtain the second report. Therefore, the terminal device determines that the first report can be reported at the second moment, but the second report cannot be reported at the second moment.

With reference to the first aspect, in some implementations of the first aspect, when the terminal device reports the first report at the second moment and reports the second report at the third moment after the second moment, that the terminal device determines that the second report cannot be reported at the second moment includes: The terminal device determines to report the second report at the third moment after the second moment.

According to the foregoing technical solution, a prerequisite for the terminal device to report the first report at the second moment and report the second report at the third moment after the second moment is that the terminal device determines that the second report cannot be reported at the second moment, but the terminal device can report the second report at the third moment after the second moment. In other words, after some AI resources are released, the terminal device may run the second AI model to obtain and report the second report, to avoid a case in which the network device cannot obtain the second report.

With reference to the first aspect, in some implementations of the first aspect, when the terminal device reports the first report at the second moment and does not report the second report at the second moment, that the terminal device determines that the second report cannot be reported at the second moment includes: The terminal device determines not to report the second report at the second moment.

With reference to the first aspect, in some implementations of the first aspect, when the terminal device reports the first report and the third report at the second moment, that the terminal device determines that the second report cannot be reported at the second moment includes: The terminal device determines to determine the third report at the first moment based on the non-AI model and report the third report at the second moment.

With reference to the first aspect, in some implementations of the first aspect, that the terminal device determines, based on the quantity of available AI resources at the first moment and the quantity of needed AI resources, that the first report is reported at the second moment, and determines that the second report cannot be reported at the second moment includes: The terminal device determines, based on the quantity of available AI resources at the first moment and the quantity of needed AI resources, that the quantity of available AI resources at the first moment is less than the quantity of needed AI resources, where the quantity of needed AI resources is a sum of a first quantity of AI resources needed for the first AI model and a second quantity of AI resources needed for the second AI model. The terminal device determines that the first quantity of AI resources is less than the second quantity of AI resources, and allocates the first quantity of AI resources in the quantity of available AI resources at the first moment to the first AI model. The terminal device determines that the first report corresponding to the first AI model to which the first quantity of AI resources is allocated is reported at the second moment, and determines that the second report corresponding to the second AI model to which the second quantity of AI resources are not allocated cannot be reported at the second moment.

According to the foregoing technical solution, when the terminal device determines that the available resources at the first moment cannot be used to simultaneously run the first AI model and the second AI model, the available resources may be preferentially used to run an AI model that needs a small quantity of AI resources, so that the terminal device can directly perform AI resource allocation based on quantities of AI resources respectively needed for different AI models. This simplifies an AI resource allocation process of the terminal device, improves AI resource allocation efficiency, and ensures, as much as possible, that more AI models can be used.

With reference to the first aspect, in some implementations of the first aspect, that the terminal device determines, based on the quantity of available AI resources at the first moment and the quantity of needed AI resources, that the first report is reported at the second moment, and determines that the second report cannot be reported at the second moment includes: The terminal device determines, based on the quantity of available AI resources at the first moment and the quantity of needed AI resources, that the quantity of available AI resources at the first moment is less than the quantity of needed AI resources, where the quantity of needed AI resources is a sum of a first quantity of AI resources needed for the first AI model and a second quantity of AI resources needed for the second AI model. The terminal device determines that a priority of the first AI model is higher than a priority of the second AI model, and allocates the first quantity of AI resources in the quantity of available AI resources at the first moment to the first AI model. The terminal device determines that the first report corresponding to the first AI model to which the first quantity of AI resources is allocated is reported at the second moment, and determines that the second report corresponding to the second AI model to which the second quantity of AI resources are not allocated cannot be reported at the second moment.

According to the foregoing technical solution, when the terminal device determines that the available resources at the first moment cannot be used to simultaneously run the first AI model and the second AI model, the available resources may be preferentially used to run an AI model with a high priority, so that the AI model with the high priority can be preferentially executed.

With reference to the first aspect, in some implementations of the first aspect, before the terminal device determines that the priority of the first AI model is higher than the priority of the second AI model, the method further includes: The terminal device receives first indication information from the network device, where the first indication information indicates that the priority of the first AI model is higher than the priority of the second AI model.

According to the foregoing technical solution, the network device may indicate priorities of different AI models by using the first indication information, so that the network device can control the terminal device to preferentially execute an AI model that the network device needs the terminal device to execute.

With reference to the first aspect, in some implementations of the first aspect, the first AI model includes one or more AI models, and the second AI model includes one or more AI models.

According to the foregoing technical solution, that the terminal device runs one or more AI models to obtain the first report, and/or the terminal device runs one or more AI models to obtain the second report may be understood as that a report is obtained based on one or more AI models, so that the terminal device can jointly run the plurality of AI models to obtain the report, thereby optimizing a manner in which the terminal device obtains the report based on the AI model.

With reference to the first aspect, in some implementations of the first aspect, when the first AI model includes a plurality of AI models, the method further includes: The terminal device sends first information to the network device, where the first information is used to report a quantity of AI resources needed for each of the plurality of AI models and a quantity of AI resources needed for each of at least one AI model combination including the plurality of AI models, and the AI model combination includes a plurality of AI models.

According to the foregoing technical solution, the terminal device may report, to the network device by using the first information, quantities of AI resources needed for different AI models and the quantity of AI resources needed for the AI model combination, so that the network device and the terminal device reach a consensus on usage of quantities of AI resources needed for the AI model and the AI model combination.

With reference to the first aspect, in some implementations of the first aspect, the method further includes: The terminal device sends second information to the network device, where the second information is used to report a quantity of AI resources needed after any one of the plurality of AI models is updated and a quantity of AI resources needed after an AI model combination including the any AI model is updated.

According to the foregoing technical solution, the terminal device may dynamically update occupation statuses of the quantities of AI resources of the AI model and the AI model combination by using the second information, so that the network device and the terminal device reach a consensus on the dynamics of resource occupation statuses of a to-be-run AI model and AI model combination.

With reference to the first aspect, in some implementations of the first aspect, the method further includes: The terminal device sends third information to the network device, where the third information indicates to adjust a total quantity of available AI resources.

According to the foregoing technical solution, the terminal device may dynamically adjust a total quantity of AI resources, and send an adjusted total quantity of AI resources to the network device by using the third information, so that the terminal device can reduce the total quantity of available AI resources.

With reference to the first aspect, in some implementations of the first aspect, the plurality of AI models correspond to at least one AI function, and the method further includes: The terminal device sends fourth information to the network device, where the fourth information is used to report a quantity of AI resources needed for each of the at least one AI function.

According to the foregoing technical solution, the terminal device may report, to the network device by using the fourth information, quantities of AI resources needed for different AI functions, so that the network device and the terminal device reach a consensus on usage of the quantities of AI resources needed for the AI functions.

With reference to the first aspect, in some implementations of the first aspect, the method further includes: The terminal device sends fifth information to the network device, where the fifth information is used to report a quantity of AI resources needed after a first AI function in the at least one AI function is updated.

According to the foregoing technical solution, the terminal device may dynamically update an occupation status of the quantity of AI resources of the AI function by using the fifth information, so that the network device and the terminal device reach a consensus on the dynamics of a resource occupation status of a to-be-run AI function.

With reference to the first aspect, in some implementations of the first aspect, before the terminal device sends the first information to the network device, the method further includes: The terminal device receives the plurality of AI models from the network device. The terminal device determines the quantity of AI resources needed for each of the plurality of AI models.

According to the foregoing technical solution, an available AI model on the terminal device side may be obtained from the network device side. For example, the AI model is developed by the network device. In this case, when a transmitted AI model is run in the terminal device, an AI resource occupation status is unknown. The terminal device may evaluate the AI resource occupation status based on the transmitted AI model, and report the status to the network device, so that the network device learns of the AI resource occupation status when the AI model sent to the terminal device is run on the terminal device side.

With reference to the first aspect, in some implementations of the first aspect, the AI resource includes a storage resource in an AI processor and/or a computing power resource in the AI processor.

According to a second aspect, a communication method is provided. The method may be performed by a network device, or may be performed by a component (for example, a chip or a circuit) of the network device. This is not limited in this application. For ease of description, the following uses an example in which the network device performs the method for description. The communication method includes: The network device triggers a terminal device to simultaneously run a first artificial intelligence AI model and a second AI model at a first moment, where the first AI model is used to determine a first report, and the second AI model is used to determine a second report. The network device determines, based on a quantity of AI resources available to the terminal device at the first moment and a quantity of AI resources needed for simultaneously running the first AI model and the second AI model at the first moment, that the terminal device can run the first AI model at the first moment to obtain the first report. The network device receives the first report from the terminal device at a fourth moment and receives the second report from the terminal device at a fifth moment after the fourth moment; the network device receives the first report from the terminal device at a fourth moment and fails to receive the second report from the terminal device; or the network device receives the first report and a third report from the terminal device at a fourth moment, where the third report is determined based on a non-AI model, and the third report is related to the second report.

With reference to the second aspect, in some implementations of the second aspect, that the network device determines, based on a quantity of AI resources available to the terminal device at the first moment and a quantity of needed AI resources, that the terminal device can run the first AI model at the first moment to obtain the first report includes: The network device determines, based on the quantity of available AI resources at the first moment and the quantity of needed AI resources, that the terminal device can run the first AI model at the first moment to obtain the first report, and determines that the terminal device cannot run the second AI model at the first moment to obtain the second report.

With reference to the second aspect, in some implementations of the second aspect, when the network device receives the first report from the terminal device at the fourth moment and receives the second report from the terminal device at the fifth moment after the fourth moment, that the network device determines that the terminal device cannot run the second AI model at the first moment to obtain the second report includes: The network device determines that the terminal device runs the second AI model after the first moment to obtain the second report.

With reference to the second aspect, in some implementations of the second aspect, when the network device receives the first report from the terminal device at the fourth moment and fails to receive the second report from the terminal device, that the network device determines that the terminal device cannot run the second AI model at the first moment to obtain the second report includes: The network device determines that the terminal device does not run the second AI model at the first moment.

With reference to the second aspect, in some implementations of the second aspect, when the network device receives the first report and the third report from the terminal device at the fourth moment, that the network device determines that the terminal device cannot run the second AI model at the first moment to obtain the second report includes: The network device determines that the terminal device determines the third report at the first moment based on the non-AI model.

With reference to the second aspect, in some implementations of the second aspect, the method further includes: The network device sends first indication information to the terminal device, where the first indication information indicates that a priority of the first AI model is higher than a priority of the second AI model.

With reference to the second aspect, in some implementations of the second aspect, the first AI model includes one or more AI models, and the second AI model includes one or more AI models. With reference to the second aspect, in some implementations of the second aspect, when the first AI model includes a plurality of AI models, the method further includes: The network device receives first information from the terminal device, where the first information is used to report a quantity of AI resources needed for each of the plurality of AI models and a quantity of AI resources needed for each of at least one AI model combination including the plurality of AI models, and the AI model combination includes a plurality of AI models.

With reference to the second aspect, in some implementations of the second aspect, the method further includes: The network device receives second information from the terminal device, where the second information is used to report a quantity of AI resources needed after any one of the plurality of AI models is updated and a quantity of AI resources needed after an AI model combination including the any AI model is updated.

With reference to the second aspect, in some implementations of the second aspect, the method further includes: The network device receives third information from the terminal device, where the third information indicates to adjust a total quantity of available AI resources.

With reference to the second aspect, in some implementations of the second aspect, the plurality of AI models correspond to at least one AI function, and the method further includes: The terminal device sends fourth information to the network device, where the fourth information is used to report a quantity of AI resources needed for each of the at least one AI function.

With reference to the second aspect, in some implementations of the second aspect, the method further includes: The network device receives fifth information from the terminal device, where the fifth information is used to report a quantity of AI resources needed after a first AI function in the at least one AI function is updated.

With reference to the second aspect, in some implementations of the second aspect, the method further includes: The network device sends the plurality of AI models to the terminal device.

For technical effects of the method shown in the second aspect and the possible designs of the second aspect, refer to the technical effects in the first aspect and the possible designs of the first aspect.

According to a third aspect, a terminal device is provided. The terminal device is configured to perform any one of the first aspect and the implementations of the first aspect. Specifically, the terminal device includes a processor and a storage. The storage is configured to store a computer program. The processor is configured to invoke the computer program from the storage and run the computer program, to enable the terminal device to perform any one of the first aspect and the implementations of the first aspect.

According to a fourth aspect, a network device is provided. The network device is configured to perform any one of the second aspect and the implementations of the second aspect. Specifically, the network device includes a processor and a storage. The storage is configured to store a computer program. The processor is configured to invoke the computer program from the storage and run the computer program, to enable the network device to perform any one of the second aspect and the implementations of the second aspect.

According to a fifth aspect, a communication apparatus is provided. The communication apparatus is configured to perform the method provided in any one of the first aspect, the second aspect, and the implementations of the first aspect and the second aspect. Specifically, the communication apparatus may include units and/or modules (for example, a processing unit and a transceiver unit) configured to perform the method provided in any one of the first aspect, the second aspect, and the implementations of the first aspect and the second aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, this application provides a processor, configured to perform the methods provided in the first aspect and the second aspect.

Operations such as sending and obtaining/receiving related to the processor may be understood as operations such as output and receiving or input of the processor, or may be understood as operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores a computer program. When the computer program is run on a communication apparatus, the communication apparatus is enabled to perform the method in any one of the implementations of the first aspect and the second aspect.

According to an eighth aspect, a computer program product including instructions is provided. When the computer program product runs on a computer, the computer is enabled to perform the method provided in any one of the implementations of the first aspect and the second aspect.

According to a ninth aspect, a chip is provided. The chip includes a processor and a communication interface. The processor reads instructions through the communication interface, to perform the method provided in any one of the implementations of the first aspect and the second aspect.

Optionally, in an implementation, the chip further includes a storage. The storage stores a computer program or instructions. The processor is configured to execute the computer program or the instructions stored in the storage. When the computer program or the instructions are executed, the processor is configured to perform the method provided in any one of the implementations of the first aspect and the second aspect.

According to a tenth aspect, a communication system is provided, and includes the terminal device in the third aspect and the network device in the fourth aspect.

**BRIEF DESCRIPTION OF DRAWINGS**

FIG. 1 is a diagram of a communication system applicable to this application;
FIG. 2 is a schematic flowchart of a communication method according to this application;
FIG. 3 is a diagram of a first moment according to an embodiment of this application;
FIG. 4 is a diagram of a resource occupation conflict of an AI model according to an embodiment of this application;
FIG. 5 is a diagram of reporting a quantity of AI resources according to an embodiment of this application;
FIG. 6 is a schematic flowchart of another communication method according to this application;
FIG. 7 is a schematic flowchart of still another communication method according to this application;
FIG. 8 is a schematic flowchart of still another communication method according to this application;
FIG. 9 is a schematic flowchart of still another communication method according to this application;
FIG. 10 is a block diagram of a communication apparatus according to an embodiment of this application;
FIG. 11 is a diagram of another communication apparatus according to an embodiment of this application; and
FIG. 12 is a diagram of a chip system according to an embodiment of this application.

**DESCRIPTION OF EMBODIMENTS**

The following describes technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system like a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

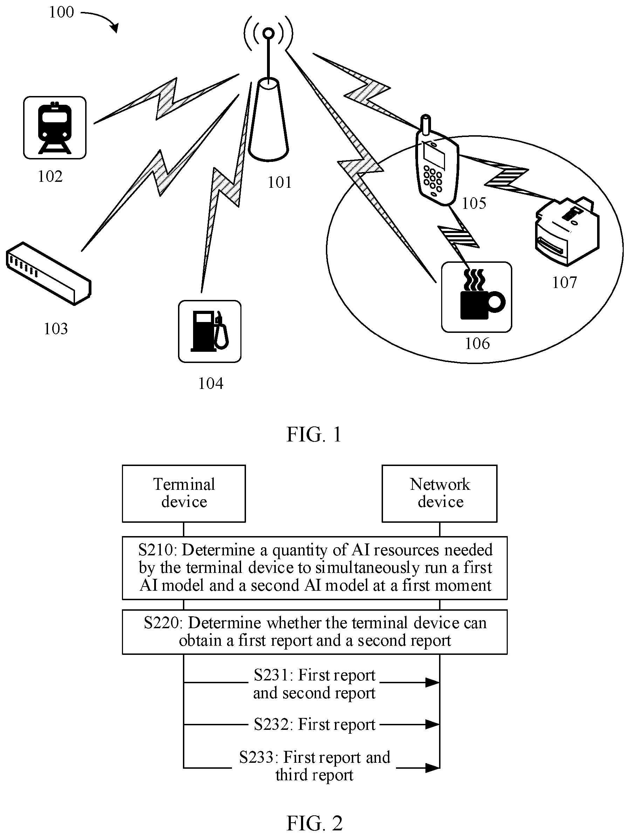

For ease of understanding embodiments of this application, for example, a communication system applicable to this application is first described with reference to FIG. 1. A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices developed by intelligently designing daily wear by using a wearable technology, such as glasses, gloves, watches, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smart watch or smart glasses. In addition, the device may alternatively be a portable device that is dedicated to only one type of application function and needs to be used together with another device like the smartphone, for example, various smart bands or smart jewelry for monitoring physical signs.

In addition, in embodiments of this application, the terminal device may alternatively be a terminal device in an IoT system. IoT is an important part of future information technology development. A main technical feature of the IoT is to connect articles to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may further include a sensor, and main functions include collecting data (some terminal devices), receiving control information and downlink data from a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), a gNB in a 5G system, for example, an NR system, a transmission point (TRP or TP), one antenna panel or a group of antenna panels (including a plurality of antenna panels) of a base station in a 5G system, or a network node that constitutes a gNB or a transmission point, for example, a baseband unit (BBU) or a distributed unit (distributed unit, DU).

The network device and the terminal device may be deployed on the land, including an indoor device, an outdoor device, a handheld device, or a vehicle-mounted device; may be deployed on the water; or may be deployed on an airplane, a balloon, and a satellite in the air. Scenarios in which the network device and the terminal device are located are not limited in embodiments of this application.

In embodiments of this application, the terminal device or the network device includes a hardware layer, an operating system layer running above the hardware layer, and an application layer running above the operating system layer. The hardware layer includes hardware such as a central processing unit, a memory management unit (memory management unit, MMU), and a memory (also referred to as a main memory). An operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable device, carrier, or medium. For example, the computer-readable medium includes but is not limited to a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage medium" may include but is not limited to a radio channel and various other media that can store, include, and/or carry instructions and/or data. For ease of understanding embodiments of this application, a communication system shown in FIG. 1 is first used as an example to describe in detail the communication system applicable to embodiments of this application. As shown in FIG. 1, the communication system 100 may include at least one network device 101 and at least one of terminal devices 102 to 107. The terminal devices 102 to 107 may be mobile or fixed. The network device 101 may communicate with one or more of the terminal devices 102 to 107 through a wireless link. Each network device may provide communication coverage for a particular geographical area, and may communicate with a terminal device located in the coverage area.

Optionally, the terminal devices may directly communicate with each other. For example, the direct communication between the terminal devices may be implemented by using a device-to-device (device-to-device, D2D) technology. As shown in FIG. 1, direct communication may be performed between terminal devices 105 and 106 and between terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in FIG. 1 communicates with the network device 101 through the terminal device 105.

A plurality of antennas may be configured for each communication device. For each communication device in the communication system 100, the configured plurality of antennas may include at least one transmit antenna configured to send a signal and at least one receive antenna configured to receive a signal. Therefore, communication devices in the communication system 100 may communicate with each other by using a multi-antenna technology.

An interface between the network device and the terminal device may be a Uu interface (or referred to as an air interface). Certainly, in future communication, names of these interfaces may remain unchanged, or may be replaced with other names. This is not limited in this application. For example, communication between the network device and the terminal device complies with a specific protocol layer structure. Network layering means that work such as sending, forwarding, packaging, or unpacking data of network nodes (for example, the network device and the terminal device), and loading or unpacking control information is respectively implemented by different hardware and software modules. In this way, a complex problem of communication and network interconnection can be simplified.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to the core network device, the data received from the terminal device, or receive, from the core network device, data that needs to be sent to the terminal device.

For ease of understanding embodiments of this application, some basic concepts in this application are briefly described. It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.

AI model: The AI model may also be referred to as an AI algorithm (or an AI operator), is a collective term of mathematical algorithms constructed according to an artificial intelligence principle, and is also a basis for resolving a specific problem by using AI. A type of the AI model is not limited in embodiments of this application. For example, the AI model may be a machine learning model, a deep learning model, a reinforcement learning model, or federated learning model.

Machine learning is a method for implementing the artificial intelligence. An objective of the method is to design and analyze some algorithms (that is, models) that enable a computer to automatically "learn". The designed algorithms are referred to as machine learning models. The machine learning models are a type of algorithms that obtain a rule by automatically analyzing data and predict unknown data according to the rule. There are various types of machine learning models. The machine learning models may be classified into the following types depending on whether a label corresponding to training data needs to be depended on during model training: 1. supervised learning model; and 2. unsupervised learning model.

Deep learning is a new technical field generated in a machine learning research process. Specifically, the deep learning is a method for performing deep representation learning on data in the machine learning. The deep learning is for interpreting the data by establishing a neural network that simulates a human brain to perform analysis and learning. In a machine learning method, almost all features need to be determined by industry experts, and then the features are encoded. However, a deep learning algorithm attempts to learn features from data. An algorithm designed based on a deep learning idea is referred to as a deep learning model.

Reinforcement learning is a special field in the machine learning, and is a process of continuously learning an optimal policy, making sequence decisions, and obtaining maximum returns through interaction between an agent (agent) and an environment (environment). In general, the reinforcement learning is learning "what to do (that is, how to map a current situation to an action) to maximize a digitalized benefit signal". The agent is not told what actions to take, but tries to find out which actions will produce the most benefits. Th reinforcement learning is different from supervised learning and unsupervised learning in a machine learning field. Th supervised learning is a process of learning from externally provided training data with labels (task-driven), and the unsupervised learning is a process of searching for implicit structures in unlabeled data (data-driven). The reinforcement learning is a process of searching for a better solution through "exploration". The agent needs to develop existing experience to gain benefits, and explore, so that better action selection space can be obtained in the future (that is, learning from mistakes). An algorithm designed based on the reinforcement learning is referred to as a reinforcement learning model.

The federated learning (also referred as collaborative learning) is a machine learning technology that can train algorithms, without exchanging them, on a plurality of distributed edge devices or servers that hold local data samples. This method is in sharp contrast to a conventional centralized machine learning technology. To be specific, in centralized machine learning, all local data sets are uploaded to a server to complete training. The federated learning enables a plurality of participants to construct a common and robust machine learning model without sharing data, so that key problems such as data privacy, data security, data access permission, and access to heterogeneous data are allowed to be resolved.

Any AI model needs to be trained before being used to resolve a specific technical problem. AI model training is a process of calculating training data by using a specified initial model, and adjusting a parameter in the initial model based on a calculation result by using a method, so that the model gradually learns a rule and has a specific function. After training, an AI model with a stable function can be used for inference. AI model inference is a process of calculating input data by using a trained AI model to obtain a predicted inference result (which may also be referred to as output data).

An AI module is a module that has an AI learning and computing capability. In a wireless communication system, the AI module may be located in an operation administration and maintenance (operation administration and maintenance, OAM) network element, may be located in a RAN (for example, a split architecture is located in a CU), may be located in a part of UE, or may be an independent network element entity. A main function of the AI module in the wireless communication system is to perform a series of AI computing such as model establishment, training approximation, and reinforcement learning based on input data (for example, in the wireless communication system, the input data may be network running data provided by a RAN side or monitored by the OAM, such as network load and channel quality). A trained model provided by the AI module has a prediction function for a network change on the RAN side, and may be usually used for load prediction, UE track prediction, and the like. In addition, the AI module may further perform policy inference from perspectives of network energy saving, mobility optimization, and the like based on a result of predicting RAN network performance by using the trained model, to obtain a proper and efficient energy saving policy, mobility optimization policy, and the like. When the AI module is located in the OAM, a current northbound interface may be reused for communication between the AI module and a gNB on the RAN side. When the AI module is located in a gNB or the CU, a current interface like F1, Xn, or Uu may be reused. When the AI module is an independent network entity, a communication link to the OAM, the RAN side, or the like needs to be re-established, for example, a wired link or a wireless link. Model transfer: The model is transferred from a network side to a UE side or transferred from a UE side to a network side. Whether the transfer is implemented according to an air interface definition or a non-air interface definition is not limited. If the transfer is implemented in an air interface definition manner, the transfer may be referred to as model transfer.

Model activation (deactivation): An AI model is enabled (disabled) for a specific AI application function.

Model switching: For a specific AI application function, a currently activated model is deactivated and another different model is activated.

AI function: Compared with the AI model, the AI function is a more-coarse-grained description, an AI function may include a functional module. For example, AI CSI feedback is an AI function, and AI positioning is another AI function. Alternatively, the AI function may be at a configuration level. For example, an AI CSI configuration is an AI function. Alternatively, the AI function may be at a usage scenario level. For example, a specific usage scenario is an AI function. Single-ended model: The single-ended model means that model inference is performed only on the network side or the terminal side. A typical single-ended model scenario includes AI beam management or the AI positioning.

Double-ended model: The double-ended model means that the model inference needs participation of both the terminal and network sides. That is, models on the terminal side and the network side form a whole model. After inference is completed on the terminal side, an inference result is sent to the network side for further inference to obtain a final output of the whole model. A typical double-ended model scenario includes AI CSI feedback.

Batch size (batch_size): The batch size represents a quantity of pieces of data (samples) transferred to the AI model at a time for training or inference. For example, a training set includes 1000 pieces of data, and if batch_size is set to 100, the AI model first uses first 100 parameters in the data set, that is, a $1^{st}$ to $100^{th}$ pieces of data, to train the AI model. After the training is completed, a weight is updated, and then a $101^{st}$ to $200^{th}$ pieces of data are used for training until the 1000 pieces of data in the training set are all used at a $10^{th}$ time.

AI resource: The AI resource in this application is a virtual resource. Corresponding to a physical resource, the AI resource may be a storage resource in an AI processor, a computing power resource in the AI processor, or the like. An actual physical resource may be mapped to a virtual resource according to a method like normalization.

For example, a memory capacity of the AI processor is 100 megabytes (megabytes, MBs). For an agreed-upon nominal value (for example, 1 gigabyte (Gigabyte, GB)), a total AI resource of the AI processor may be mapped to 0.1.

For another example, a maximum computing power of the AI processor is 1 giga floating-point operations per second (Giga Floating-point Operations Per Second, GFLOPS). For an agreed-upon nominal value (for example, 1 GFLOPS), a total resource of the AI processor may be mapped to 1.

CSI processing rule: CSI calculation in NR needs to consume a large quantity of computing resources, and includes completing a channel measurement and channel estimation on a configured measurement resource, and calculating CSI based on an estimation result. In NR, a concept of a CSI processing unit (CSI Processing Unit, CPU) is introduced. The CSI processing unit indicates a CSI processing capability of the terminal device. The CSI processing unit is a concept of a virtual resource, not a specific concept of a physical resource. For example, a CPU is a computing core, or may be a computing thread. This is not defined in the standard.

The CSI calculation includes a plurality of types, for example, different CSI calculation amounts, or measured channels have different configurations, for example, different quantities of ports. CPUs vary depending on computing content, which is predefined in a protocol. Capability information of the terminal device carries content of a total quantity of CPUs, and is reported to the network device. At a granularity of each orthogonal frequency division multiplexing (Orthogonal Frequency Division Multiplexing, OFDM) symbol, the terminal device may calculate a currently remaining CPU resource based on a quantity L of currently occupied CPU resources. If the CSI calculation is triggered, according to a current protocol definition, a CPU needs to be occupied from a specific symbol to perform CSI calculation. In this case, the terminal device determines, based on a remaining CPU resource on a corresponding OFDM symbol, a triggered CSI report that needs to be updated, that is, a triggered CSI report that needs to occupy the CPU for calculation, or a CSI report that may not need to be updated. Specific determining may be performed based on a priority predefined in the protocol. For example, the terminal device determines a priority of a corresponding report based on a report type (for example, periodic, semi-persistent, or aperiodic), report content (for example, reference signal received power (Reference Signal Received Power, RSRP) or a signal to interference plus noise ratio (Signal to Interference plus Noise Ratio, SINR)), a cell, or a report identifier (report ID).

In addition, for ease of understanding embodiments of this application, the following several descriptions are provided.

First, in this application, "indicating" may include direct indicating and indirect indicating. When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent together as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or sending occasions of these pieces of sub-information may be predefined, for example, predefined according to the protocol, or may be configured by a transmitting end device by sending configuration information to a receiving end device. The configuration information may include but is not limited to one or a combination of at least two of radio resource control signaling, MAC layer signaling, and physical layer signaling. The radio resource control signaling includes, for example, RRC signaling. The MAC layer signaling includes, for example, a MAC-CE. The physical layer signaling includes, for example, DCI.

Second, "at least one" shown in this application means one or more, and "a plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not constitute any limitation on implementation processes of embodiments of this application. It should be understood that objects described in such a manner are interchangeable in proper cases, to describe solutions other than embodiments of this application. In addition, in embodiments of this application, words such as "210" and "220" are merely identifiers for ease of description, and do not limit a sequence of performing steps.

Third, in this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "storing" in embodiments of this application may mean storing in one or more storages. The one or more storages may be separately disposed, or may be integrated into an encoder or a decoder, a processor, or a communication apparatus. Alternatively, a part of the one or more storages may be separately disposed, and a part of the one or more storages are integrated into the decoder, the processor, or the communication apparatus. A type of the storage may be a storage medium in any form. This is not limited in this application.

Fifth, the "protocol" in embodiments of this application may be a standard protocol in the communication field, for example, may include an LTE protocol, an NR protocol, and a related protocol applied to a future communication system. This is not limited in this application.

Sixth, in embodiments of this application, "in a case of", "when", and "if" may be used interchangeably sometimes. It should be noted that expressed meanings thereof are consistent when a difference thereof is not emphasized.

Seventh, in embodiments of this application, terms and English acronyms and abbreviations, such as radio resource control (RRC), are all examples provided for ease of description, and should not constitute any limitation on this application. This application does not exclude a possibility of defining another term that can implement a same or similar function in an existing or a future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which a communication method provided in embodiments of this application can be applied, describes the basic concepts that may be used in embodiments of this application, and describes the AI model in the basic concepts. In current NR R18, related discussion on air interface AI has been introduced. For example, the AI is used to resolve problems such as CSI feedback, beam management, and positioning. With a powerful learning capability of the AI, better performance than an existing algorithm can be achieved. Therefore, different AI models may be used to replace conventional algorithm modules to resolve specific communication problems in the future. In conventional communication algorithm implementation, an algorithm on a UE side is generally executed on a general-purpose processor, for example, a central processing unit or a DSP. AI model training or inference is a compute-intensive task, and therefore may be generally implemented by using a device with denser computing units, for example, a GPU or an NPU, to achieve higher computing efficiency. Therefore, an AI algorithm on the UE side applied to communication in the future may still use this mode and be executed on AI-dedicated hardware.

For a terminal, communication-related calculation may overlap in time. For example, for a measurement resource, a related reporting amount and the like that are reported to a base station need to be calculated. Therefore, after the AI is introduced, the terminal may need to simultaneously execute a plurality of AI models or AI functions.

In addition, the AI model may be used on the UE side for different purposes. The AI model may be used to generate a related report (referred to as normal AI inference). For example, based on a measurement quantity, for example, a channel, supported by an air interface, CSI is input into the model and a corresponding AI CSI report is output. In addition, the AI model inference may also be used for model monitoring. An AI method is data-driven, and model quality generally depends on quality of a collected data set. Therefore, in comparison with a conventional algorithm, performance of the AI algorithm may not be ensured when a scenario, a configuration, or the like changes. That is, model performance may deteriorate because generalization performance does not meet a requirement. Therefore, AI model monitoring appears to be essential. A network side or the UE may periodically, semi-persistently, or aperiodically run the AI model to obtain a result and monitor the model performance.

Considering that capabilities and resources (for example, a quantity of AI accelerators, a quantity of cores of the accelerator, and a memory size of the accelerator) of these devices on the terminal side may be limited, when a plurality of AI models need to be run simultaneously, it may be impossible to run all the AI models. In this case, a model conflict occurs. Therefore, a problem of which AI model is run and which AI model is not run in these conflicting models needs to be resolved.

An AI conflict processing method is: A concept of an AI processing unit (AI processing unit, APU) is defined, which is similar to a concept of a CSI computing unit, and it is pointed out that different AI models may occupy different APUs. A quantity of occupied APUs is related to a parameter volume of the AI model. In addition, a definition that when simultaneously using the plurality of AI models, the UE needs to meet a condition that a sum of APUs does not exceed a maximum quantity of APUs is further provided. In other words, the APU represents a capability of the terminal during AI running. However, the AI conflict processing method has the following disadvantage:

Only different quantities of AI resources occupied by single AI models are considered. Actually, if the plurality of AI models are simultaneously used, occupied resources are not necessarily a simple sum of resources occupied by all single models. There may be some optimization manners. Therefore, resource occupation in a case of an AI model combination needs to be further considered.

To resolve a problem existing in the current AI conflict processing method, this application provides a communication method, mainly to define a running policy of a terminal device for a plurality of AI models when the terminal device side needs to simultaneously run the plurality of AI models, but a capability of an AI processor of the terminal is insufficient.

It should be understood that the communication method provided in embodiments of this application may be applied to a system in which communication is performed by using a multi-antenna technology, for example, the communication system 100 shown in FIG. 1. The communication system may include at least one network device and at least one terminal device. The network device may communicate with the terminal device by using the multi-antenna technology.

It should be further understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be the terminal device, or may be a functional module that can invoke a program and execute the program in the terminal device.

FIG. 2 is a schematic flowchart of a communication method according to this application. The method includes the following step:

S210: A terminal device and a network device determine a quantity of AI resources needed by the terminal device to simultaneously run a first AI model and a second AI model at a first moment.

Specifically, the first AI model is used to determine a first report, and the second AI model is used to determine a second report. The report in this embodiment includes but is not limited to a CSI measurement feedback report, a positioning result report, a beam management report, and the like. It should be understood that the first report and the second report in this embodiment may be reports obtained by running the AI model. Examples are not described one by one herein again. In addition, in this embodiment, the first report may be one or more reports, and all reports determined based on the first AI model may be referred to as first reports. Similarly, the second report may be one or more reports, and all reports determined based on the second AI model may be referred to as second reports.

It should be noted that, in this embodiment, a prerequisite for the network device to determine the quantity of AI resources needed by the terminal device to simultaneously run the first AI model and the second AI model at the first moment is that the network device knows a quantity of AI resources needed by the terminal device to run the first AI model and a quantity of AI resources needed by the terminal device to run the second AI model. For example, the terminal device reports, to the network device, the quantity of AI resources needed for running the first AI model and the quantity of AI resources needed for running the second AI model, so that the network device can determine the quantity of AI resources needed by the terminal device to simultaneously run the first AI model and the second AI model at the first moment.

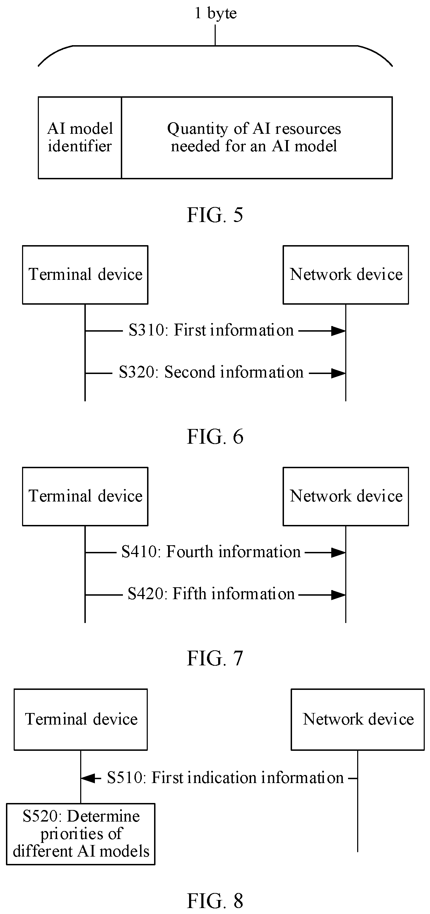

For ease of understanding, with reference to FIG. 6, the following describes in detail how the terminal device reports, to the network device, the quantity of AI resources needed for running the AI model. Details are not described herein. In addition, an AI model granularity in this embodiment may alternatively be replaced with an AI function granularity. With reference to FIG. 7, the following describes in detail how the terminal device reports, to the network device, a quantity of AI resources needed for running the AI function. Details are not described herein.

For example, the terminal device may be triggered, in the following possible implementations, to simultaneously run the first AI model and the second AI model at the first moment.

In a possible implementation, the network device aperiodically triggers, by using trigger information, the terminal device to simultaneously run the first AI model and the second AI model at the first moment, to obtain and report the first report and the second report.

For example, the network device sends the trigger information to the terminal device at a first moment #1, where the trigger information is used to trigger the terminal device to measure a corresponding measurement resource and report the first report and the second report, the first report is determined based on the first AI model, and the second report is determined based on the second AI model.

Optionally, the first moment is a start point of a slot in which the trigger information is located, the trigger information and a reference signal are in a same slot, and the start point may be a 1st symbol of the slot.

Optionally, the first moment is a start time point of the measurement resource, for example, a 1st symbol of the measurement resource. In this case, there is a specific interval between a time point of the trigger information (for example, a moment of delivering DCI) and a time point of the measurement resource.

It should be noted that, in this implementation, the terminal device may first measure a corresponding measurement resource, and then use a corresponding model based on a measurement result, to determine the first report. Therefore, the first moment may be a moment of the measurement resource, for example, a 1st symbol (or a start time point of the 1st symbol), a 1st slot (or a start time point of the 1st slot), a 1st subframe (or a start time point of the 1st subframe), or a 1st radio frame (or a start time point of the 1st radio frame) in which a time domain resource position of the measurement resource is located.

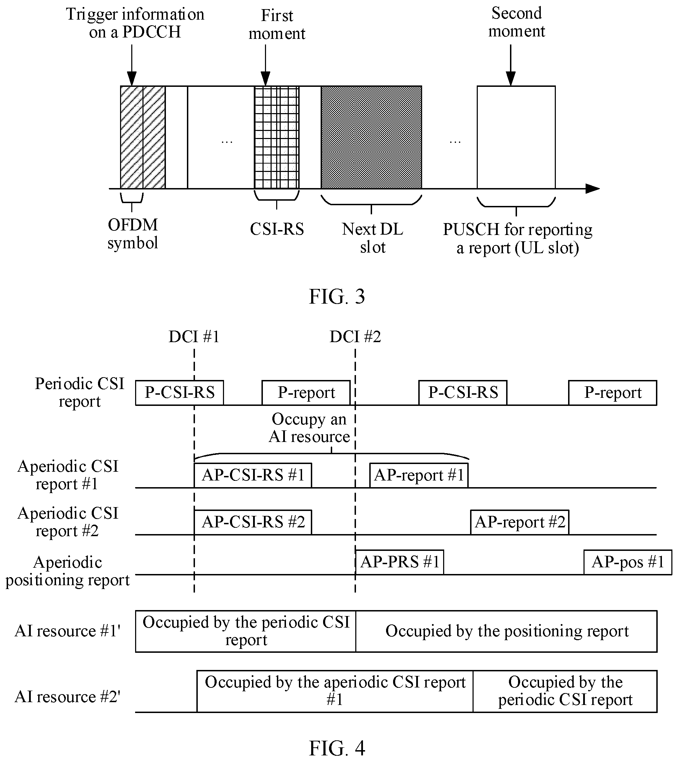

For ease of understanding, the first moment is described with reference to FIG. 3. FIG. 3 is a diagram of a first moment according to an embodiment of this application. It can be learned from FIG. 3 that the first moment is a 1st symbol on which a needed AI resource is located. As shown in FIG. 3, trigger information carried on a physical downlink control channel (physical downlink control channel, PDCCH) is delivered on a 1st OFDM symbol, the first moment is a 1st OFDM symbol on which the measurement resource (for example, a channel state information-reference signal (channel state information-reference signal, CSI-RS) shown in FIG. 3) is located, and measuring the CSI-RS herein means starting to occupy the needed AI resource. Optionally, there is a specific time interval (for example, a next downlink (downlink, DL) slot shown in FIG. 3) between a second moment (for example, an uplink (uplink, UL) slot of a physical uplink shared channel (physical uplink shared channel, PUSCH) shown in FIG. 3) at which the terminal device reports a report and a moment at which the terminal device determines the report. The measurement resource may be a corresponding reference signal. For example, in CSI measurement feedback, the measurement resource is a CSI-RS resource. For another example, in beam management, the measurement resource is a CSI-RS resource or a synchronization signal block SSB resource. For still another example, in positioning, the measurement resource is a positioning reference signal PRS resource.

For example, that the first report and the second report are AI CSI measurement feedback reports is used as an example. The network device first configures two AI CSI report configurations for the terminal device in a CSI measurement configuration (for example, a CSI-MeasConfig), for example, configures two CSI-ReportConfigs, and configures, in the CSI-ReportConfig, a corresponding CSI report as an AI report. In a related report configuration, an AI model correspondingly used for the CSI report may be further indicated. In addition, in a configuration related to an aperiodic CSI reporting, for example, in a CSI-AperiodicTriggerState, the two CSI report configurations and corresponding measurement resources are associated (the measurement resources associated with the two reports may be the same or may be different), so that the network device side may indicate, at the first moment #1 by using DCI, that aperiodic CSI-RS measurements and reports corresponding to two CSI reports may be dynamically triggered simultaneously. The first moment may be a start moment of a symbol, a slot, a subframe, or a radio frame in which the DCI or an aperiodic CSI-RS is located. If a time offset of a related aperiodic measurement resource, for example, an aperiodicTriggeringOffset, is configured as 0, the measurement resource is also sent in a slot in which the first moment #1 is located, and the terminal device also starts to measure a corresponding CSI-RS resource in the slot in which the first moment #1 is located.

For example, that the first report and the second report are AI beam management reports is used as an example. The network device first configures two beam measurement sets or reference signal sets: a set B #1 and a set B #2 for the terminal device in a beam management measurement configuration (for example, a Beam-MeasConfig or a CSI-MeasConfig). The set B #1 is used for beam prediction in spatial domain, and is used by the terminal to predict an optimal beam in a spatial-domain beam set: set A #1 by using an AI model #1. The set B #2 is used for beam prediction in time domain, and is used by the terminal to predict an optimal beam in a time-domain beam set: set A #2 by using an AI model #2. In addition, in a configuration related to aperiodic beam management, for example, in a CSI-AperiodicTrigger-State, two beam management report configurations and corresponding measurement resources are associated (a measurement configuration associated with one report is the set B #1, and a measurement configuration associated with the other report is the set B #2), so that the network device side may indicate, at the first moment #1 by using DCI, that two aperiodic beam measurements and reports may be dynamically triggered simultaneously.

For example, that the first report and the second report are AI positioning measurement reports is used as an example. The network device first separately configures, for the terminal device in a positioning-related configuration, an AI positioning measurement report used for line-of-sight (line-of-sight, LOS) or non-line-of-sight (non-line-of-sight, NLOS) determining, and an AI positioning measurement report used for obtaining time of arrival (Time of Arrival, TOA). The two measurement reports are obtained by using an AI model #1 and an AI model #2 respectively. The two AI positioning reports are associated with a same PRS measurement resource. In a configuration related to an aperiodic positioning measurement, the network device associates the two positioning reports in a same trigger state, so that the network device side may indicate, at the first moment #1 by using DCI, that two aperiodic positioning measurements and reports may be dynamically triggered simultaneously.

In another possible implementation, the network device configures the terminal device to periodically determine the first report and the second report, where a moment at which the first report and the second report are periodically or semi-persistently determined includes the first moment, so that the terminal device determines to simultaneously run the first AI model and the second AI model at the first moment.

For example, that the first report and the second report are AI CSI measurement feedback reports is used as an example. The network device configures, for the terminal device, reporting moments and reporting periodicities of the first report and the second report, and periodic CSI-RS measurement resources corresponding to the first report and the second report. CSI-RS start moments ($1^{st}$ symbols on which resources are located) corresponding to the first report and the second report are the first moment, so that the terminal device determines to simultaneously run the first AI model and the second AI model at the first moment.

It should be noted that the first report may be an aperiodic report, the second report may be a periodic report (or the first report is a periodic report, and the second report is an aperiodic report), and both a start moment of a measurement resource corresponding to the first report and a start moment of a measurement resource corresponding to the second report are the first moment.

It should be further noted that the first report and the second report may be any combination of an AI CSI measurement feedback report, an AI beam management report, or an AI positioning measurement report. For example, the first report may be an AI CSI measurement feedback report, and the second report may be an AI beam management report.

Optionally, determining the quantity of AI resources needed by the terminal device to simultaneously run the first AI model and the second AI model at the first moment may be understood as determining quantities of respectively needed AI resources occupied by the first AI model and the second AI model from the first moment.

Specifically, determining the quantity of needed AI resources occupied by the AI model may be a process from measuring a corresponding measurement resource by the terminal device to reporting a corresponding report, may be a process from measuring a corresponding measurement resource by the terminal device to obtaining a corresponding report, may be a process from inputting a measurement result into the model by the terminal device to obtaining a corresponding report, or the like. This is not limited in this embodiment. There may be a plurality of definitions of a time period in which the AI resource is occupied for running the AI model. This is not limited in this embodiment. For example, the time period in which the quantity of AI resources are occupied for running the AI model starts from the $1^{st}$ symbol, the $1^{st}$ slot, or the like in which the time domain resource position of the measurement resource is located to an end time point of a last symbol of the physical uplink shared channel (physical uplink shared channel, PUSCH) or a physical uplink control channel (Physical Uplink Control Channel, PUCCH) carrying the report.

For example, if the quantity of AI resources occupied by the first AI model from the first moment is a quantity #1, and the quantity of AI resources occupied by the second AI model from the first moment is a quantity #2, it is determined that the quantity of AI resources needed by the terminal device to simultaneously run the first AI model and the second AI model at the first moment is the quantity #1+the quantity #2.

It should be understood that, in this embodiment, a quantity of AI resources needed by the terminal device to simultaneously run a plurality of AI models at the first moment may be determined. For ease of description, determining the quantity of AI resources needed by the terminal device to simultaneously run the first AI model and the second AI model at the first moment is used as an example for description. For example, a quantity of AI resources needed by the terminal device to simultaneously run the first AI model, the second AI model, and a third AI model at the first moment may be further determined. Details are not described herein.

Further, in this embodiment, after the quantity of AI resources needed by the terminal device to simultaneously run the first AI model and the second AI model at the first moment is determined, whether the terminal device can obtain the first report and the second report based on the first AI model and the second AI model respectively at the first moment may be further determined based on a quantity of AI resources available to the terminal device at the first moment and the determined quantity of needed AI resources. In this case, the method procedure shown in FIG. 2 further includes the following step:

S220: The terminal device and the network device determine whether the terminal device can obtain the first report and the second report.

This embodiment mainly considers a case in which the terminal device side needs to simultaneously run the plurality of AI models, but a capability of an AI processor of the terminal device is insufficient. That the terminal device needs to simultaneously run the first AI model and the second AI model, and the capability of the AI processor of the terminal device cannot support simultaneous running of the first AI model and the second AI model, where for example, at the first moment, the terminal device supports running of the first AI model, but does not support running of the second AI model is used as an example for description.

For ease of understanding, FIG. 4 describes a case in which the network device triggers the terminal device to report the first report and the second report, but the terminal device cannot support simultaneous running of the first AI model and the second AI model. FIG. 4 is a diagram of a resource occupation conflict of an AI model according to an embodiment of this application. A total quantity of AI resources of the terminal device is 2 (for example, an AI resource #1' and an AI resource #2' shown in FIG. 4). A quantity of AI resources that need to be occupied by each AI model is 1 (for example, the occupied AI resource #1' or the occupied AI resource #2' shown in FIG. 4).

It can be learned from FIG. 4 that the network device triggers, at the first moment #1 by using DCI #1, the terminal device to aperiodically report a CSI report #1 and a CSI report #2 (for example, as shown in FIG. 4, an AI resource needed for determining the CSI report #1 is an AP-CSI-RS #1, and an AI resource needed for determining the CSI report #2 is an AP-CSI-RS #2, where an AP-report #1 shown in FIG. 4 is the CSI report #1, and an AP-report #2 is the CSI report #2), and triggers, at a first moment #2 by using DCI #2, the terminal device to aperiodically report a positioning report #1 (for example, as shown in FIG. 4, an AI resource needed for determining the positioning report #1 is an AP-PRS #1, where AP-pos #1 shown in FIG. 4 is the positioning report #1). When the terminal device determines the CSI report #1 and the CSI report #2 based on the AI model, a quantity of AI resources available to the terminal device is 1 (because the AI resource #1' is occupied by a periodically reported CSI report, where as shown in FIG. 4, an AI resource needed for determining the periodic CSI report is a P-CSI-RS, and a P-report shown in FIG. 4 is the periodic CSI report). In this case, the AI resource #2' is used to support determining the CSI report #1. Therefore, the terminal device does not support determining the CSI report #2 based on the AI model. When the terminal device determines the positioning report #1 based on the AI model, in a quantity of AI resources available to the terminal device, the AI resource #1' is released, the AI resource #2' is occupied by a periodically reported CSI report, and the terminal device may occupy the AI resource #1' and determine the positioning report #1 based on the AI model.

Specifically, the terminal device and the network device determine, based on the quantity of AI resources available to the terminal device at the first moment and the quantity that is of AI resources needed for running the first AI model and the second AI model and that is determined in step S210, that the terminal device can report the first report at the second moment and cannot report the second report at the second moment.

For example, the terminal device may run the first AI model at the first moment to obtain the first report, and report the first report at the second moment, and the terminal device cannot run the second AI model at the first moment to obtain the second report.

In a possible implementation, the terminal device may determine, based on quantities of AI resources respectively needed for different AI models, how to allocate the quantity of available AI resources.

For example, in this implementation, the first AI model is one AI model, and the second AI model is also one AI model. For example, the first AI model is the AI model #1, the second AI model is the AI model #2, and a quantity of AI resources needed for running the AI model #1 and the AI model #2 at the first moment is a quantity #1 of AI resources.

Specifically, that the terminal device determines, based on the quantity of available AI resources at the first moment and the quantity #1 of AI resources, that the first report is reported at the second moment, and determines that the second report cannot be reported at the second moment includes: First, the terminal device determines, based on the quantity of available AI resources at the first moment and the quantity #1 of AI resources, that the quantity of available AI resources at the first moment is less than the quantity #1 of AI resources.

Then, the terminal device determines that a quantity #3 of AI resources needed for the AI model #1 is less than a quantity #2 of AI resources needed for the AI model #2, and allocates the quantity #3 of AI resources in the quantity of available AI resources at the first moment to the AI model #1. Finally, the terminal device determines that the first report corresponding to the AI model #1 to which the quantity #3 of AI resources is allocated is reported at the second moment, and determines that the second report corresponding to the AI model #2 to which the quantity #2 of AI resources are not allocated cannot be reported at the second moment.

It should be understood that the foregoing uses an example in which the terminal device allocates a quantity of AI resources to the AI model #1 and the AI model #2 based on quantities of AI resources respectively needed for the AI model #1 and the AI model #2 to describe how the terminal device allocates a quantity of AI resources to different AI models. This does not constitute any limitation on the protection scope of this application. The terminal device may further allocate a quantity of AI resources to more than two AI models based on quantities of AI resources respectively needed for the more than two AI models.

For example, the terminal device determines quantities of AI resources respectively needed for the plurality of AI models that need to be run simultaneously at the first moment, sequentially occupies, in ascending order of the quantities of needed AI resources, the quantity of available AI resources at the first moment, and then determines an AI model that cannot be run at the first moment. It may be represented as follows: Quantities $O_1$, ..., $O_N$ of AI resources occupied by N AI models are sorted in ascending order. The terminal determines, according to $\sum_{n=0}^{M-1} O\_n \leq O\_total - L$, an AI model that cannot be run. For example, models M, M+1, ..., and N are models that cannot be run, that is, reports M, M+1, ..., and N are reports that cannot be calculated. M is a maximum value that satisfies the formula, $O\_total$ is a total quantity of AI resources, and $L$ is a quantity of currently occupied AI resources.

For example, in this implementation, the first AI model is a plurality of AI models, and the second AI model is also a plurality of AI models. For example, the first AI model includes an AI model #1_1 and an AI model #1_2, and the AI model #1_1 and the AI model #1_2 may be referred to as an AI model combination #1. The second AI model includes an AI model #2_1 and an AI model #2_2, and the AI model #2_1 and the AI model #2_2 may be referred to as an AI model combination #2.

Specifically, that the terminal device determines, based on the quantity of available AI resources at the first moment and a quantity #1 of AI resources, that the first report is reported at the second moment, and determines that the second report cannot be reported at the second moment includes: First, the terminal device determines, based on the quantity of available AI resources at the first moment and the quantity #1 of AI resources, that the quantity of available AI resources at the first moment is less than the quantity #1 of AI resources.

Then, the terminal device determines that a quantity #1_1 of AI resources needed for the AI model combination #1 is less than a quantity #2_1 of AI resources needed for the AI model combination #2, and allocates the quantity #1_1 of AI resources in the quantity of available AI resources at the first moment to the AI model combination #1.

Finally, the terminal device determines that the first report corresponding to the AI model combination #1 to which the quantity #1_1 of AI resources is allocated is reported at the second moment, and determines that the second report corresponding to the AI model combination #2 to which the quantity #2_1 of AI resources are not allocated cannot be reported at the second moment. It should be understood that the foregoing uses an example in which the terminal device allocates a quantity of AI resources to the AI model combination #1 and the AI model combination #2 based on quantities of AI resources respectively needed for the AI model combination #1 and the AI model combination #2 to describe how the terminal device allocates a quantity of AI resources to different AI model combinations. This does not constitute any limitation on the protection scope of this application. The terminal device may further allocate a quantity of AI resources to more than two AI model combinations based on quantities of AI resources respectively needed for the more than two AI model combinations.

In addition, it should be noted that in this manner, the first AI model may be a set including an AI model and an AI model combination. Similarly, the second AI model may be a set including an AI model and an AI model combination. The terminal device may determine, based on the AI model and the AI model combination that are included in the first AI model, the quantity of AI resources needed for the first AI model, determine, based on the AI model and the AI model combination that are included in the second AI model, the quantity of AI resources needed for the second AI model, and after determining quantities of AI resources respectively needed for the first AI model and the second AI model, allocate the quantity of available AI resources in the foregoing manner. Details are not described herein again.

In another possible implementation, the terminal device may determine, based on priorities of different AI models, how to allocate the quantity of available AI resources.

For example, in this implementation, the first AI model is one AI model, and the second AI model is also one AI model. For example, the first AI model is the AI model #1, the second AI model is the AI model #2, and a quantity of AI resources needed for running the AI model #1 and the AI model #2 at the first moment is a quantity #1 of AI resources.

Specifically, that the terminal device determines, based on the quantity of available AI resources at the first moment and the quantity #1 of AI resources, that the first report is reported at the second moment, and determines that the second report cannot be reported at the second moment includes: First, the terminal device determines, based on the quantity of available AI resources at the first moment and the quantity #1 of AI resources, that the quantity of available AI resources at the first moment is less than the quantity #1 of AI resources.

Then, the terminal device determines that a priority of the AI model #1 is higher than a priority of the AI model #2, and allocates a quantity #3 of AI resources in the quantity of available AI resources at the first moment to the AI model #1.

Finally, the terminal device determines that the first report corresponding to the AI model #1 to which the quantity #3 of AI resources is allocated is reported at the second moment, and determines that the second report corresponding to the AI model #2 to which the quantity #2 of AI resources are not allocated cannot be reported at the second moment.

It should be understood that the foregoing uses an example in which the terminal device allocates a quantity of AI resources to the AI model #1 and the AI model #2 based on priorities of the AI model #1 and the AI model #2 to describe how the terminal device allocates a quantity of AI resources to different AI models. This does not constitute any limitation on the protection scope of this application. The terminal device may further allocate a quantity of AI resources to more than two AI models based on priorities of the more than two AI models.

For example, the terminal device determines the plurality of AI models that need to be simultaneously run at the first moment, and sequentially determines, based on priorities of the plurality of AI models, an AI model that preferentially uses the AI resource, until the quantity of available AI resources at the first moment are fully occupied. For example, in the quantity of available AI resources at the first moment, an AI model corresponding to a priority P1 is preferentially run, and occupies an AI resource. If there are still a quantity of remaining AI resources after the AI model corresponding to P1 occupies a quantity of AI resources, an AI model corresponding to a priority P2 is run, and occupies an AI resource. The priority P1 is higher than the priority P2.

In addition, it should be noted that, for a plurality of AI models that have a same priority, a quantity of AI resources is allocated based on quantities of respectively needed AI resources. For example, if priorities of the first AI model and the second AI model are the same, a quantity of AI resources is allocated to the first AI model and the second AI model based on a first quantity of AI resources needed for the first AI model and a second quantity of AI resources needed for the second AI model. For example, in this implementation, the first AI model is a plurality of AI models, and the second AI model is also a plurality of AI models. For example, the first AI model includes an AI model #1_1 and an AI model #1_2, and the AI model #1_1 and the AI model #1_2 may be referred to as an AI model combination #1. The second AI model includes an AI model #2_1 and an AI model #2_2, and the AI model #2_1 and the AI model #2_2 may be referred to as an AI model combination #2. In this case, a priority of the AI model combination may be defined in a predefined manner. For example, the priority of the AI model combination may be predefined as a priority corresponding to an AI model with a high or low priority. Alternatively, a priority of the AI model combination may be directly defined. For example, priorities of the model combination #1 and the model combination #2 are directly defined, and the priority of the model combination does not need to be obtained based on a priority of an AI model in the AI model combination.

Optionally, the terminal device may determine priorities of different AI models or AI model combinations by itself; or the network device may indicate priorities of different AI models or AI model combinations by using first indication information. With reference to FIG. 8, the following describes in detail how the network device indicates the priorities of the different AI models or AI model combinations by using the first indication information. Details are not described herein.

It should be noted that the terminal device may determine to report, at a plurality of different second moments, a report obtained through a measurement. For example, the terminal device determines to report, at a second moment #1 and a second moment #2, the report obtained through the measurement. In this embodiment, for ease of description, moments at which the report is reported are collectively referred to as the second moment. In other words, a report that cannot be reported at the second moment may be understood as a report that cannot be reported by the terminal device at a moment at which the report needs to be reported. A reason why the report cannot be reported may be that the report cannot be obtained through calculation based on a latest measurement resource.

In this embodiment, for a case in which the terminal device cannot run the second AI model at the first moment to obtain the second report, a unified processing manner for the case between the terminal device and the network device includes but is not limited to the following several possible processing manners:

Manner 1: The terminal device reports the first report at the second moment, and reports the second report at a third moment after the second moment. It may be understood as that the terminal device and the network device agree upon that a reporting of a report that cannot be obtained by running the AI model at the first moment may be delayed.

Specifically, a manner of an agreed-upon delayed reporting may be that the network device configures a delayed reporting backoff value X in a related configuration corresponding to the second report, to indicate to delay sending by X time units after the second moment. The manner of the agreed-upon delayed reporting may alternatively be terminal requesting. For example, the terminal device sends a delayed reporting request to the network device before the second moment, and the network device configures a delayed reporting moment after the second moment based on the request.

For example, in the processing manner in the manner 1, the network device may receive the first report of the terminal device at a fourth moment (if an air interface delay is not considered, the fourth moment is the second moment), and receive the second report at a fifth moment (if the air interface delay is not considered, the fifth moment is the third moment) after the fourth moment. In a case shown in the manner 1, the method procedure shown in FIG. 2 further includes the following step:

S231: The terminal device sends the first report and the second report to the network device.

In the case shown in the manner 1, that the terminal device and the network device determine that the terminal device cannot run the second AI model at the first moment to obtain the second report includes: The terminal device and the network device determine that the terminal device can run the second AI model after the first moment to obtain the second report, and report the second report at the third moment after the second moment. For example, the terminal device may run the second AI model to obtain the second report after some AI resources are released.

Manner 2: The terminal device reports the first report at the second moment, and does not report the second report at the second moment. It may be understood as that the terminal device and the network device agree upon that a report that cannot be obtained by running the AI model at the first moment may not be reported.

For example, in the processing manner in the manner 2, the network device may receive the first report of the terminal device at a fourth moment (if an air interface delay is not considered, the fourth moment is the second moment), and fail to receive the second report. In a case shown in the manner 2, the method procedure shown in FIG. 2 further includes the following step:

S232: The terminal device sends the first report to the network device.

In the case shown in the manner 2, that the terminal device and the network device determine that the terminal device cannot run the second AI model at the first moment to obtain the second report includes: The terminal device and the network device determine that the terminal device does not report the second report at the second moment.

Manner 3: The terminal device reports the first report and a third report at the second moment, where the third report is determined based on a non-AI model, and the third report is related to the second report. It may be understood as that the terminal device and the network device agree upon that a report that cannot be obtained by running the AI model at the first moment may be determined in a manner of determining based on the non-AI model and reported.

That the third report is related to the second report may be understood as that the third report and the second report need to report information of a same type (for example, CSI, a precoding matrix indicator (precoding matrix indicator, PMI), a rank indicator (rank indicator, RI), or a channel quality indicator (channel quality indicator, CQI)), or the third report and the second report are for a same measurement resource. A difference lies in that the second report is determined based on the second AI model (or an AI algorithm), and the third report is a report determined in the manner of determining the report based on the non-AI model because the second AI model cannot start to be run at the first moment.

For example, the manner of determining based on the non-AI model may be determining the report in a legacy (legacy) manner, for example, a PMI reporting determined in a codebook-based manner in NR R15/R16/R17. In the conventional manner, an algorithm may be executed on a general-purpose processor to determine the third report. For example, if conventional computing resources (for example, DSP resources) currently used for conventional calculation are sufficient, the third report may be obtained through calculation in the conventional manner and reported.

In a possible implementation, the network device may associate, in the configuration related to the second report, a configuration related to the third report, for example, reporting information or a reporting amount of the third report, or a physical resource that carries the third report. When the terminal device cannot report the second report, the terminal device reports the third report by using the associated configuration of the third report.

In another possible implementation, the terminal device may send a request message #1 to the network device. The request message #1 is used to request the network device to agree to determine the report in the conventional manner and report the report. When the network device agrees to determine the report in the conventional manner and report the report, the terminal device reports the third report.

In still another possible implementation, the terminal device includes the third report and an identifier of the third report in a pre-allocated reporting air interface channel, where the identifier of the third report indicates that the third report is a conventional report rather than a report determined based on the AI model. Optionally, the third report and the identifier of the third report may be carried in RRC signaling.

For example, in the processing manner in the manner 3, the network device may receive the first report and the third report of the terminal device at a fourth moment (if an air interface delay is not considered, the fourth moment is the second moment). In a case shown in the manner 3, the method procedure shown in FIG. 2 further includes the following step:

S233: The terminal device sends the first report and the third report to the network device.

In the case shown in the manner 3, that the terminal device and the network device determine that the terminal device cannot run the second AI model at the first moment to obtain the second report includes: The terminal device and the network device determine that the terminal device cannot run the second AI model at the first moment to obtain the second report, but the terminal device may determine the third report at the first moment based on the non-AI model, and report the third report at the second moment.

For example, the foregoing lists, in the manner 1 to the manner 3, several processing policies implemented by the terminal device and the network device when the terminal device cannot start to run the second AI model at the first moment to obtain the second report. It should be noted that, in this embodiment, how the terminal device specifically processes a conflict case in which the second report cannot be obtained based on the second AI model is not limited, provided that a processing manner for the conflict case is agreed upon with the network device in advance. For example, the processing manner may alternatively be as follows: The terminal device runs the first AI model at the first moment to obtain the first report, and reports the first report at the second moment, and when the terminal device cannot run the second AI model at the first moment to obtain the second report, the terminal device and the network device agree upon that a historical result (for example, a historical CSI calculation result obtained for a same measurement resource) may be reported, that is, the calculation result is not updated; or when the terminal device cannot run the second AI model at the first moment to obtain the second report, the terminal device directly indicates to the network device that the second report cannot be obtained.

In this embodiment, the first AI model may also be understood as a first-type AI model. Similarly, the second AI model may also be understood as a second-type AI model. The quantity of AI resources available to the terminal device at the first moment cannot support simultaneous running of the first-type AI model and the second-type AI model. For example, if the AI resource available to the terminal device at the first moment supports running of the first-type AI model, a plurality of first-type AI models may simultaneously start to be run at the first moment, and occupy the AI resource.

In addition, the AI model on the terminal device side in this embodiment may be received from the network device side. With reference to FIG. 6, the following describes in detail how the network device sends the AI model to the terminal device. Details are not described herein. Alternatively, the AI model on the terminal device side may be determined by the terminal device. For example, the AI model is developed by a terminal device vendor. For example, the AI model (whether a terminal device-side AI model in a double-ended model or merely a single-ended model) that needs to be used on the terminal device side is independently developed by a terminal device or chip vendor. How the terminal device obtains the AI model is not limited in this embodiment.

In the communication method shown in FIG. 2, for the second report that cannot be obtained at the first moment based on the second AI model, a plurality of different processing policies of the terminal device are defined. The processing policies may be a delayed reporting (for example, the second report is obtained based on the second AI model after the first moment and is reported after the second moment), may be not reporting (for example, the terminal device does not report the second report), may be determining the third report at the first moment in another manner (for example, the third report is determined in the manner of determining based on the non-AI model, and is reported at the second moment), or the like. The plurality of different processing policies may be determined by the terminal device and the network device through negotiation, may be configured by the network device for the terminal device, or may be preconfigured in the terminal device and the network device. This can prevent the network device from incorrectly considering that a corresponding report cannot be received due to link quality or the like.

FIG. 6 is a schematic flowchart of another communication method according to this application. The method includes the following step:

S310: A terminal device sends first information to a network device. In other words, the network device receives the first information from the terminal device.

The first information indicates a quantity of AI resources needed for each of at least one AI model of the terminal device, and a quantity of AI resources needed for different AI model combinations including the at least one AI model.

A local AI model of the terminal device may be understood as an AI model that the network device side needs to perceive that the terminal device side has or uses. Considering that there may be more than one AI model on the terminal device side, the network device side also needs to be capable of distinguishing between AI models used on the terminal device side. Therefore, the AI model on the terminal device side needs to be first learned of by the network device side. To be specific, after a model registration procedure is performed, the network device side may correspondingly indicate a registered AI model.

The resource needed for the AI model combination may be understood as a quantity of AI resources occupied when a plurality of AI models on the terminal device side are simultaneously run, for example, a quantity of AI resources occupied when an AI model #n and an AI model #m on the terminal device side are simultaneously run. One AI model combination formed by two AI models is merely an example, and may not be limited to being formed by two AI models in actual implementation.

For example, if the local AI model of the terminal device includes an AI model #1 and an AI model #2, the terminal device reports, by using the first information, that a total quantity of AI resources available to the terminal device is $O$, a quantity of resources needed for the AI model #1 is $O_1$, a quantity of resources needed for the AI model #2 is $O_2$, and a quantity of resources needed for different AI model combinations #1 including the AI model #1 and the AI model #2 is $O_3$.

For example, in the communication method shown in FIG. 2, the terminal device may report, by using the first information, a quantity of AI resources needed for a first AI model. If the first AI model includes a plurality of AI models #1, the first information is used to report a quantity of AI resources needed for each of the plurality of AI models #1 and a quantity of AI resources needed for each of at least one AI model combination #1 including the plurality of AI models #1. The AI model combination #1 includes a plurality of AI models #1.

Similarly, in the communication method shown in FIG. 2, the terminal device may report, by using the first information, a quantity of AI resources needed for a second AI model. If the second AI model includes a plurality of AI models #2, the first information is used to report a quantity of AI resources needed for each of the plurality of AI models #2 and a quantity of AI resources needed for each of at least one AI model combination #2 including the plurality of AI models #2. The AI model combination #2 includes a plurality of AI models #2.

Optionally, the terminal device further reports the total quantity of available AI resources to the network device. For example, the first information further indicates the total quantity of AI resources available to the terminal device. Alternatively, for another example, the terminal device reports the total quantity of available AI resources to the network device by using other information (for example, information #1).

In addition, it should be noted that, in addition to different AI model combinations, a same AI model or different AI model combinations may need different quantities of AI resources in batch sizes (batch_size) of different input data. For example, for using the AI model #n, a quantity of AI resources needed when one sample is input and a quantity of AI resources needed when two samples are input are not necessarily proportional. That is, resource occupation when the two samples are input is not necessarily twice that when the one sample is input. Therefore, the quantity of AI resources needed for the AI model or the AI model combination may be further subdivided from a dimension of an input sample quantity.

For ease of understanding, a possible form of the first information in this embodiment is described with reference to Table 1.

Table 1

| AI model | Batch_size | Quantity of needed AI resources |
|---|---|---|
| Model 1 | 1 | 0.3 |
| Model 2 | 1 | 0.5 |
| {Model 1, Model 2} | 1 | 0.5 |
| Model 1 | 2 | 0.4 |

It can be learned from a 2nd row and a 5th row in Table 1 that, for the model 1, in different batch_size, quantities of needed AI resources are different, and a quantity of AI resources needed when one sample is input and a quantity of AI resources needed when two samples are input are not proportional.

For example, in a process in which the terminal device runs the AI model, quantities of AI resources needed for different AI models may be considered, to allocate the quantity of AI resources. Quantities of AI resources needed for different AI models or AI model combinations shown in Table 1 are used with reference to specific examples to describe how the terminal device allocates the quantity of AI resources.

Example 1: A quantity of AI resources available to the terminal device at a moment #1 is 0.4. The terminal device may determine, based on the quantities of AI resources respectively needed for different AI models, that at the moment #1, running of the model 1 is supported, but running of the model 2 is not supported.

Example 2: A quantity of AI resources available to the terminal device at a moment #1 is 0.6. Because a quantity of AI resources needed for the model 1 and the model 2 that are jointly optimized to {Model 1, Model 2} is 0.5, simultaneous running of the model 1 and the model 2 can be supported.

Example 3: The terminal device may determine, with reference to input sample quantities (that is, batch_size) corresponding to different AI models, a quantity of AI resources actually needed for the AI models. For example, if the used model 1 corresponds to two CSI reports, two samples may be input into the model 1 at a time. In this case, resource occupation of the model 1 is 0.4.

For example, in this embodiment, a process in which the terminal device sends the first information to the network device may be understood as a capability reporting phase of the terminal device, that is, reported content may be carried in capability information of the terminal device (UECapabilityInformation). For example, the first information is sent to the network device in UECapability Information.

For example, the terminal device may alternatively send the first information to the network device by using other signaling. For example, the terminal device sends, to the network device by using RRC signaling, a MAC-CE, or UCI, a quantity of AI resources needed for the local AI model. For example, if the quantity of AI resources is sent by using the RRC signaling, a dedicated information element or field may be added to the RRC signaling, to describe a quantity of AI resources needed for each AI model. Details are as follows:

```
ModelResourceInfo ::=          SEQUENCE {
    ModelId                    SEQUENCE{1,…,N},
    Resource                   ENUMERATE{0.1, 0.2, …, }
    }
```

A resource description of each AI model is carried in ModelResourceInfo. The information element carries a model ID or an identifier (for example, the ModelId field) and the quantity (for example, the Resource field) of AI resources corresponding to the AI model. The quantity of AI resources may be one value in a discrete value set.

For example, if the quantity of AI resources is sent by using MAC-CE signaling, an ID of each model and a corresponding quantity of resources may be carried in the MAC-CE signaling. For ease of understanding, with reference to FIG. 5, how to send the quantity of AI resources is described. FIG. 5 is a diagram of reporting a quantity of AI resources according to an embodiment of this application. It can be learned from FIG. 5 that 1-byte MAC-CE signaling is used to describe an AI model and a quantity of AI resources needed for the AI model. The quantity of AI resources may be represented by n1 (for example, 6) bits, and represents a value in a discrete value set (that is, a possible AI resource quantity set).

For example, if the quantity of AI resources is sent by using the uplink control information (uplink control information, UCI), the network device and the terminal device reach a consensus on a corresponding UCI format in advance. For example, a quantity of AI models whose resources need to be reported is first reported, and then an identifier ID of each AI model and a quantity of needed AI resources are reported. Information in the UCI may be independently encoded or jointly encoded, and may be carried on a PUCCH channel, or may be carried on a PUSCH channel.

It should be further noted that the network device and the terminal device may have a default value for the quantity of AI resources needed for the AI model or the AI model combination, for example, a default value preset in a protocol, for example, 0.1. If no corresponding resource occupation value is configured for an AI model or AI model combination in the foregoing configuration, it is considered that the default value is used.

Optionally, if a quantity of AI resources needed for a local AI model of the terminal device is updated, the terminal device may indicate, by using second information, to update a quantity of AI resources needed for the AI model and a quantity of AI resources needed for an AI model combination associated with the AI model. That is, the method procedure shown in FIG. 6 may further include the following step:

S320: The terminal device sends the second information to the network device. In other words, the network device receives the second information from the terminal device.

The second information is used to report a quantity of AI resources needed after any one of the plurality of AI models is updated and a quantity of AI resources needed after an AI model combination including the any AI model is updated.

For example, if a quantity of AI resources needed before the AI model #1 is updated is 0#1, and after the AI model #1 is updated, a quantity of AI resources needed for an updated AI model #1 is 0#2, the terminal device notifies, by using the second information, the network device that the quantity of AI resources needed for the AI model #1 changes from $O\#1$ to $O\#2$ (for example, the second information indicates $O\#2$, or the second information indicates a difference between 0#1 and $O\#2$).

In addition, it should be noted that, for a case of the AI model combination, execution efficiency optimization is usually optimization performed for a specific AI model combination under a specific feature like an AI model structure. Therefore, if an AI model in the combination changes greatly, execution efficiency or a quantity of occupied AI resources of the AI model combination may also change. Therefore, if a single AI model changes, a change in a quantity of AI resources occupied by another AI model combination including the AI model also needs to be considered. For example, if the AI model #1 is updated, and AI model combinations including the AI model #1 include the AI model combination #1 and the AI model combination #2, the terminal device indicates, by using the second information, quantities of AI resources needed after quantities of resources needed for the AI model combination #1 and the AI model combination #2 are updated. For example, before the AI model #1 is updated, the quantity of AI resources needed for the AI model combination #1 is $O\#1'$, and after the AI model #1 is updated, an updated quantity of AI resources needed for the AI model combination #1 is $O\#2'$.

For example, that the AI model #1 on the terminal device side is updated may include but is not limited to:

A structure of the AI model #1 changes, or a structure of the AI model #1 remains unchanged, and only a parameter of the AI model #1 changes. When the structure of the AI model #1 changes, a parameter volume may change, or when an operator used by the AI model #1 changes, a memory occupied by the AI model #1 in an AI processor or a computing power resource that needs to be consumed when the model is executed may change. Consequently, the quantity of AI resources needed for the AI model #1 changes. If the structure of the AI model #1 remains unchanged but the parameter of the AI model #1 changes, a large quantity of parameters may be 0, and a memory occupied by the AI model #1 may also change.

Consequently, the quantity of AI resources needed for the AI model #1 changes.

It should be understood that, in this embodiment, when the AI model #1 is updated, whether the change in the quantity of needed AI resources needs to be reported by using the second information is an implementation behavior of the terminal device. In other words, when the AI model #1 is updated, the terminal device may report the second information, or may not report the second information.

In a possible implementation, the second information is a MAC-CE, RRC signaling, or UCI information.

In another possible implementation, the second information is related signaling for updating the capability information of the terminal device.

It can be learned from the foregoing that when the AI model #1 is updated, the terminal device may report, by using the second information, the change in the quantity of AI resources needed for the AI model #1.

For example, in this embodiment, that the second information indicates the quantity of AI resources needed for the updated AI model #1 and a quantity of AI resources needed for at least one updated AI model combination includes but is not limited to the following several possible indication manners:

Manner 1: Fields indicating occupation statuses of quantities of AI resources needed for all AI models and AI model combinations are reserved. In this case, a size of an update report is fixed. If a quantity of AI resources needed for an AI model resource is not updated, a quantity of needed AI resources in a field that indicates an occupation status of the quantity of needed AI resources and that corresponds to the AI model does not change.

For example, if the second information is the RRC signaling, the corresponding RRC signaling may be shown as follows:

ModelResourceUpdateInfo ::=  SEQUENCE {

Model1  ENUMERATE{0.1, 0.2, …, }

Model2  ENUMERATE{0.1, 0.2, …, }

…

ModelN  ENUMERATE{0.1, 0.2, …, }

}

A resource quantity of each AI model is reported and carried in ModelResourceUpdateInfo. If the quantity of occupied AI resources is updated, an updated value is used. If the quantity of occupied AI resources is not updated, a previous value is used for filling.

For example, if the second information is the MAC-CE, similar to an implementation of the MAC-CE of the first information, each AI model may use a 1-byte MAC-CE to indicate the quantity of needed AI resources. Regardless of whether an update occurs, MAC-CEs corresponding to all the AI models and AI model combinations are sent.

Manner 2: The terminal device first notifies the network device that the quantity of needed AI resources needs to be updated, or notifies of a specific AI model or AI model combination whose quantity of needed AI resources needs to be updated. The network device then allocates air interface resources based on a specific update status. The terminal device reports updated content to the network device based on a size of an allocated signaling report.

For example, the terminal device first uses UCI information to carry an update request (for example, a scheduling request SR or an indication similar to the SR) or uses MAC-CE information to carry an update request (for example, dedicated resource update request signaling). After receiving the update request, the network device further schedules the terminal device to send a quantity of AI models or AI model combinations that need to be updated. After receiving the quantity of updated AI models or AI model combinations, the network device may determine overheads of corresponding signaling resources or air interface resources, and further schedule the terminal device to send the second information to send an updated resource status. Alternatively, the update request may be sent together with the quantity of AI models or AI model combinations that need to be updated.

Manner 3: A maximum accommodating quantity of an update report is predefined, and then a specific updated resource quantity and a correspondingly updated resource occupation status are carried in the report.

For example, the terminal device sends the update report by using one piece of RRC signaling. The update report may carry a quantity of resources needed for 10 AI models or AI model combinations. In this case, the terminal device indicates, in the RRC signaling, an ID of an updated AI model or an ID of an updated AI model combination, and a correspondingly updated quantity of AI resources. For an AI model or an AI model combination that exceeds the accommodating quantity, the terminal device does not request the network device to update a corresponding resource quantity. For example, the terminal device does not update a corresponding AI model or AI model combination.

Specifically, the terminal device may determine to report an AI model or an AI model combination that is updated and an AI model or an AI model combination that is not updated.

In addition, the terminal device may further report the change in the quantity of AI resources in another case. For example, if the terminal device needs to reduce the total quantity of available AI resources, the terminal device sends third information to the network device, where the third information indicates to adjust the total quantity of available AI resources.

For example, when power consumption of the terminal device is greater than or equal to a first threshold or the terminal device is overheated (for example, a temperature exceeds a threshold), the terminal device determines to adjust the total quantity of available AI resources. The first threshold may be determined by the terminal device, may be determined by the network device and the terminal device through negotiation, or may be preconfigured in the network device and the terminal device.

For example, when the terminal device needs to divide a part of the AI resources to perform other AI functions, and these AI functions are not air interface AI functions supported in the protocol (for example, other AI functions other than AI CSI feedback, AI beam management, and AI positioning), the terminal device determines to adjust the total quantity of available AI resources. Further, in this embodiment, after learning of the quantity of resources needed for the at least one local AI model of the terminal device and the quantity of resources needed for different AI model combinations including the at least one AI model, the network device may trigger the terminal device to perform uplink reporting based on the AI model. In this embodiment, if an AI resource occupation conflict (for example, the terminal device side needs to simultaneously run the plurality of AI models, but a capability of the AI processor of the terminal device is insufficient) occurs in a process in which the terminal device performs uplink reporting based on the AI model, for a reporting procedure, refer to the communication method shown in FIG. 2. Details are not described herein again. If no AI resource occupation conflict occurs in a process in which the terminal device performs uplink reporting based on the AI model, the terminal device obtains a corresponding report based on the AI model and reports the report.

In the communication method shown in FIG. 6, the terminal may dynamically update the quantities of AI resources needed for the AI model and the AI model combination of the terminal, and report the updated quantities of AI resources to the network device, so that the network device and the terminal device reach a consensus on a usage rule and a usage status of the AI model. In addition, with reference to the communication method shown in FIG. 2, when the plurality of AI models need to be run simultaneously, an AI model that is preferentially run may be determined, and a consensus may be reached on a manner of processing a report corresponding to an AI model that cannot be used. The resource occupation status of the AI model may be dynamically updated, so that the method is applicable to a scenario in which a model is updated.

In current AI discussion, there are two dimensions for model management: a model dimension and a function dimension. The function dimension means that different AI applications, different AI configurations, different AI usage scenarios, or the like are considered. For example, different AI use cases such as an AI CSI reporting and an AI beam management may be considered as different AI functions. Different measurement configurations, for example, different CSI resource configurations, may also be considered as different AI functions. Alternatively, the AI function may be at a usage scenario level. For example, a specific usage scenario is an AI function. One AI function may include a plurality of AI models. The communication method shown in FIG. 6 is mainly considered from a perspective of an AI model granularity. Alternatively, the AI model may be replaced with the AI function. The following provides descriptions with reference to FIG. 7.

FIG. 7 is a schematic flowchart of still another communication method according to this application. The method includes the following step:

S410: A terminal device sends fourth information to a network device. In other words, the network device receives the fourth information from the terminal device.

The fourth information is used to report a quantity of AI resources needed for each of at least one AI function.

For example, a first AI function in the at least one AI function corresponds to a plurality of AI models, and an AI resource needed for the first AI function is a quantity of AI resources needed for an AI model that needs a largest quantity of AI resources in the plurality of AI models.

In addition, the AI function may further correspondingly refine different quantities of AI resources with reference to a corresponding quantity of reports that need to be simultaneously reported.

For ease of understanding, a possible form of the fourth information in this embodiment is described with reference to Table 2.

Table 2

| AI function | Reporting quantity | Quantity of needed AI resources |
|---|---|---|
| AI CSI feedback | 1 | 0.3 |
| AI beam management | 1 | 0.5 |

(continued)

| AI function | Reporting quantity | Quantity of needed AI resources |
|---|---|---|
| AI beam management | 2 | 0.6 |

It can be learned from a 2nd row and a 3rd row in Table 2 that, for a same AI function, quantities of needed AI resources are different in different reporting quantities.

Specifically, the fourth information may be carried by using UE capability information, for example, carried in UECapabilityInformation. Alternatively, the fourth information may be RRC signaling, MAC-CE signaling, or UCI information. An implementation of the fourth information is similar to the foregoing descriptions of the first information. Details are not described herein again.

For example, in a process in which the terminal device runs the AI function, quantities of AI resources needed for different AI functions may be considered, to allocate a quantity of AI resources. Quantities of AI resources needed for different AI functions shown in Table 2 are used with reference to specific examples to describe how the terminal device allocates the quantity of AI resources.

Example 4: A quantity of AI resources available to the terminal device at a moment #1 is 0.4. The terminal device may determine, based on the quantities of AI resources respectively needed for different AI functions, that at the moment #1, the AI CSI feedback is supported, but the AI beam management is not supported.

When the AI function on the terminal device side is updated, or a new AI function is registered, the quantity of AI resources needed for the AI function may be updated. That is, the method procedure shown in FIG. 7 may further include the following step:

S420: The terminal device sends fifth information to the network device. In other words, the network device receives the fifth information from the terminal device.

The fifth information is used to report a quantity of AI resources needed after the first AI function in the at least one AI function is updated.

For example, the first AI function includes the plurality of AI models. If a quantity of AI resources needed for the first AI function is the quantity of needed AI resources corresponding to the AI model that needs the largest quantity of AI resources in the plurality of AI models, when an AI model in the plurality of AI models is updated, and a quantity of AI resources needed for an updated AI model does not exceed the original largest quantity of needed AI resources corresponding to the AI function, the quantity of needed AI resources corresponding to the AI function does not change. In this case, no update reporting is needed.

For example, if a quantity of needed AI resources corresponding to an AI function changes, the terminal device reports an updated quantity of AI resources needed for the AI function to the network device.

Further, in this embodiment, after learning of the quantity of resources needed for the at least one local AI function of the terminal device, the network device may trigger the terminal device to perform uplink reporting based on the AI function. In this embodiment, if an AI resource occupation conflict (for example, the terminal device side needs to simultaneously run a plurality of AI functions, but a capability of an AI processor of the terminal device is insufficient) occurs in a process in which the terminal device performs uplink reporting based on the AI function, for a reporting procedure, refer to the communication method shown in FIG. 2. Details are not described herein again. If no AI resource occupation conflict occurs in a process in which the terminal device performs uplink reporting based on the AI function, the terminal device obtains a corresponding report based on the AI function and reports the report.

In the communication method shown in FIG. 7, the terminal may dynamically update the quantity of AI resources needed for the AI function of the terminal, and report the updated quantity of AI resources to the network device, so that the network device and the terminal device reach a consensus on a usage rule and a usage status of the AI function. In addition, with reference to the communication method shown in FIG. 2, when the plurality of AI functions need to be run simultaneously, an AI function that is preferentially run may be determined, and a consensus may be reached on a manner of processing a report corresponding to an AI function that cannot be used. FIG. 8 is a schematic flowchart of still another communication method according to this application. The method includes the following step:

S510: A network device sends first indication information to a terminal device. In other words, the terminal device receives the first indication information from the network device.

The first indication information indicates a priority of each of at least one local AI model of the terminal device. For example, the network device determines priorities of different AI models based on a status of the network device and a usage status of the AI model of the terminal device, and sends, to the terminal device, the first indication information indicating the priorities of different AI models.

It should be noted that each AI model may alternatively have a default priority agreed upon in a protocol, for example, a lowest priority. If a priority of an AI model is not indicated in the first indication information, it is considered that the priority of the model is the default priority.

For example, AI model inference can be used not only for inference needed for a normal reporting, but also for inference needed for model monitoring. In a period of time, the network device may consider that a result of AI model monitoring has a higher priority. In this case, a high priority may be configured for an AI model corresponding to the AI model monitoring.

For another example, the network device may configure a low priority for inference tasks corresponding to some AI models with poor performance.

For another example, if the network device finds, through the model monitoring, that performance of some AI models is poor, use priorities of the AI models may be reduced on a basis that the AI models are not disabled or deactivated. If there are no sufficient quantity of AI resources, the AI models are not used.

For another example, for some AI models, if it is found, through performance monitoring, that performance in a conventional manner is equivalent to that in an AI manner, use priorities of the AI models may also be reduced.

Specifically, the first indication information may be RRC signaling, MAC-CE signaling, or a DCI indication.

Further, in this embodiment, after receiving the first indication information, the terminal device may determine the priorities of different AI models. In this case, the method procedure shown in FIG. 8 further includes the following step: S520: The terminal device determines the priorities of different AI models.

For example, in a process in which the terminal device runs the AI model, the priorities of different AI models may be considered, to allocate a quantity of AI resources, and how the terminal device allocates the quantity of AI resources is described with reference to specific examples.

Example 5: The terminal device determines a preferentially used AI model based on quantities of AI resources needed for different AI models and priority indication information sent by the network device.

For example, quantities of AI resources respectively needed for a plurality of AI models are sequentially $O_1$, $O_2$, $O_3$, ... in ascending order. When these AI models are used, some AI models may be used for inference needed for a normal reporting, some AI models are used for model monitoring, and priorities are $P_1$, $P_2$, ... respectively.

The terminal device sequentially determines a preferentially used AI model based on the priorities until a quantity of available AI resources are fully occupied. For example, in the quantity of available AI resources, a resource occupied by an AI model corresponding to the priority $P_1$ is preferentially calculated. If there are still a quantity of available AI resources after all AI models corresponding to $P_1$ occupy the AI resource, a resource occupied by an AI model of the priority $P_2$ is calculated.

If there is an AI model combination, and priorities in the AI model combination are different, for example, a combination of an AI model 1 and an AI model 2, the inconsistency may be handled in a predefined manner. For example, a priority of the AI model combination may be predefined as a priority corresponding to an AI model with a high or low priority.

If there is an AI model combination, a priority of each AI model combination may alternatively be separately defined, and does not need to be determined based on a resource occupation status of a model in the model combination.

For example, a priority of an AI model combination #1 is separately defined as $P'_1$, and a priority of an AI model combination #2 is separately defined as $P'_2$. In addition, the AI model in this embodiment may be replaced with an AI function. In other words, the network device may alternatively indicate priorities of different AI functions.

In the communication method shown in FIG. 8, the network device dynamically adjusts the priorities of different models or AI functions based on a requirement, and sends the priorities to the terminal device. The terminal device preferentially uses the available AI resource for an AI model or an AI function with a high priority, so that the network device can control the terminal device to preferentially execute an AI model that the network device needs the terminal device to execute.

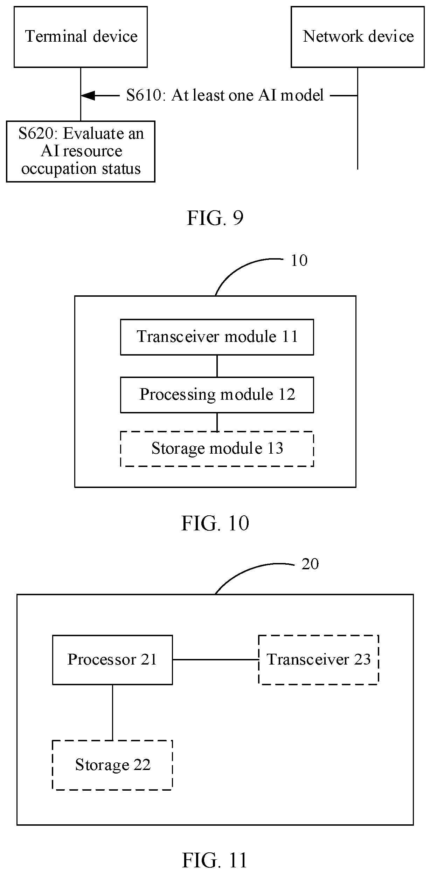

FIG. 9 is a schematic flowchart of still another communication method according to this application. The method includes the following step: S610: A network device sends at least one AI model to a terminal device. In other words, the terminal device receives the at least one AI model from the network device.

Specifically, an AI model on the terminal device side may be sent by the network device side to the terminal device. For example, the AI model is developed by a vendor on the network device side, or the AI model is finely adjusted or updated by the network side. In this case, if the vendor on the network device side and a vendor on the terminal device side do not negotiate to determine a quantity of AI resources needed for running the AI model on the terminal device side, the quantity of AI resources needed for the transmitted AI model on the terminal device side is unknown to the network device. Therefore, in an AI model transmission scenario, the terminal device may evaluate the received AI model to determine the quantity of AI resources needed for running the AI model on the terminal device side, and report the quantity to the network device.

It should be noted that the AI model sent by the network device may include an AI model structure and an AI model parameter, or may include only an AI model parameter (for example, a model structure is known in advance between the network device and the terminal device).

For example, the network device transmits one or more AI models to the terminal device in an air interface manner. The one or more AI models are developed by the vendor on the network device side, or the AI model is finely adjusted or updated by the network side.

Optionally, in this embodiment, the network device may send the one or more AI models to the terminal device in any one of the following manners:

Manner 1: The network device sends the AI model as application data to the terminal device in a user plane data transmission manner.

Manner 2: The network device describes content of the AI model in a radio signaling manner, for example, defines the AI model in an RRC manner, and configures the model for the terminal device. The definition of the AI model includes the AI model structure and/or the AI model parameter. For example, a language of an AI framework is used for description (for example, tensorflow or ONNX), or for another example, a language defined by 3GPP is used for description (for example, description is performed in an RRC signaling manner).

Manner 3: In addition to a method for transferring the AI model structure and parameter, the AI model may alternatively be transferred in a private format between the network device and the terminal device. For example, a compiled AI model or an AI model mirror (which may be analogous to an exe file) that can be directly used is transferred.

Further, in this embodiment, after receiving the at least one AI model sent by the network device, the terminal device evaluates a quantity of AI resources needed for each of the at least one AI model and a quantity of AI resources needed for an AI model combination that may include the at least one AI model. In this case, the method procedure shown in FIG. 9 further includes the following step:

S620: The terminal device evaluates an AI resource occupation status.

Specifically, after receiving the at least one AI model transmitted by the network device, the terminal device evaluates an AI resource occupation status of the at least one AI model, and determines the quantity of AI resources needed for each of the at least one AI model and the quantity of AI resources needed for the AI model combination that may include the at least one AI model.

For example, it takes a long time to evaluate the AI resource occupation status. Therefore, in addition to running the at least one AI model and evaluating the resource occupation status in the terminal device, another manner is to send the at least one AI model to a centralized node, and the centralized node runs the at least one AI model and evaluates the resource occupation status. For example, an application server of the terminal device runs the at least one AI model and evaluates the resource occupation status.

Optionally, the terminal device may perform evaluation under control of the network device. For example, the network device indicates to the terminal device that resource occupation status evaluation needs to be performed only on some AI models, and may not be performed on another AI model.

Further, the terminal device sends the resource occupation status of the at least one AI model to the network device. In the communication method shown in FIG. 9, the terminal device reports the resource occupation status of the at least one AI model to the network device by using first information. Details are not described herein again.

The communication method shown in FIG. 9 is for a scenario in which transmission of AI models is performed. Considering that in this scenario, the terminal device and the network device cannot learn in advance of quantities of AI resources needed for running these AI models on the terminal device side, the terminal device needs to feed back an evaluated resource occupation status to the network device, to facilitate calculation of occupied resources when a subsequent AI model conflict occurs.

It should be understood that sequence numbers of the foregoing processes do not mean execution sequences. The execution sequences of the processes should be determined based on functions and internal logic of the processes, and should not constitute any limitation on implementation processes of embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, devices (for example, the network device and the terminal device) in an existing network architecture are mainly used as an example for description. It should be understood that specific forms of the devices are not limited in embodiments of this application. For example, all devices that can implement a same function in the future are applicable to embodiments of this application.

It may be understood that in the foregoing method embodiments, the methods and the operations implemented by the device (for example, the network device or the terminal device) may alternatively be implemented by a component (for example, a chip or a circuit) of the device.

The communication methods provided in embodiments of this application are described above in detail with reference to FIG. 2 to FIG. 9. The communication methods are mainly described from a perspective of interaction between the terminal device and the network device. It may be understood that, to implement the foregoing functions, the terminal device and the network device include corresponding hardware structures and/or software modules for performing the functions. A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on a particular application and a design constraint condition of the technical solutions. A person skilled in the art may use different methods to implement the described functions for each particular application, but it should not be considered that the implementation goes beyond the scope of this application.

The following describes in detail, with reference to FIG. 10 to FIG. 12, communication apparatuses provided in this application. It should be understood that descriptions of apparatus embodiments correspond to the descriptions of the method embodiments. Therefore, for content that is not described in detail, refer to the foregoing method embodiments. For brevity, some content is not described again.

In embodiments of this application, division into functional modules may be performed on a transmitting end device or a receiving end device based on the foregoing method examples. For example, division into each functional module may be performed based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in actual implementation. An example in which division into each functional module is performed based on each corresponding function is used below for description.

FIG. 10 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to enable the apparatus to implement actions of the device in the foregoing method embodiments.

In a design, the apparatus 10 may correspond to the terminal device in the foregoing method embodiments, or a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform a processing related operation of the terminal device in the foregoing method embodiments.

In a possible implementation, the processing module 12 is configured to determine a quantity of AI resources needed for simultaneously running a first artificial intelligence AI model and a second AI model at a first moment, where the first AI model is used to determine a first report, and the second AI model is used to determine a second report. The processing module 12 is further configured to determine, based on a quantity of available AI resources at the first moment and the quantity of needed AI resources, that the first report is reported at a second moment. The transceiver module 11 is configured to: report the first report at the second moment and report the second report at a third moment after the second moment; the transceiver module 11 is configured to: report the first report at the second moment and not report the second report at the second moment; or the transceiver module 11 is configured to report the first report and a third report at the second moment, where the third report is determined based on a non-AI model, and the third report is related to the second report.

When the apparatus 10 is configured to perform the method in FIG. 2, the transceiver module 11 may be configured to perform steps of receiving and sending information in the method, for example, steps S231, S232, and S233; and the processing module 12 may be configured to perform processing steps in the method, for example, steps S210 and S220.

When the apparatus 10 is configured to perform the method in FIG. 6, the transceiver module 11 may be configured to perform steps of receiving and sending information in the method, for example, steps S310 and S320; and the processing module 12 may be configured to perform processing steps in the method.

When the apparatus 10 is configured to perform the method in FIG. 7, the transceiver module 11 may be configured to perform steps of receiving and sending information in the method, for example, steps S410 and S420; and the processing module 12 may be configured to perform processing steps in the method.

When the apparatus 10 is configured to perform the method in FIG. 8, the transceiver module 11 may be configured to perform a step of receiving and sending information in the method, for example, step S510; and the processing module 12 may be configured to perform a processing step in the method, for example, step S520.

When the apparatus 10 is configured to perform the method in FIG. 9, the transceiver module 11 may be configured to perform a step of receiving and sending information in the method, for example, step S610; and the processing module 12 may be configured to perform a processing step in the method, for example, step S620.

It should be understood that specific processes in which the units perform the foregoing corresponding steps are described in detail in the foregoing method embodiments. For brevity, details are not described herein again.

In another design, the apparatus 10 may correspond to the network device in the foregoing method embodiments, or a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform a processing related operation of the network device in the foregoing method embodiments.

In a possible implementation, the processing module 12 is configured to trigger a terminal device to simultaneously run a first artificial intelligence AI model and a second AI model at a first moment, where the first AI model is used to determine a first report, and the second AI model is used to determine a second report. The processing module 12 is further configured to determine, based on a quantity of AI resources available to the terminal device at the first moment and a quantity of AI resources needed for simultaneously running the first AI model and the second AI model at the first moment, that the terminal device can run the first AI model at the first moment to obtain the first report. The transceiver module 11 is configured to: receive the first report from the terminal device at a fourth moment and receive the second report from the terminal device at a fifth moment after the fourth moment; the transceiver module 11 is configured to: receive the first report from the terminal device at a fourth moment and fail to receive the second report from the terminal device; or the transceiver module 11 is configured to receive the first report and a third report from the terminal device at a fourth moment, where the third report is determined based on a non-AI model, and the third report is related to the second report.

When the apparatus 10 is configured to perform the method in FIG. 2, the transceiver module 11 may be configured to perform steps of receiving and sending information in the method, for example, steps S231, S232, and S233; and the processing module 12 may be configured to perform processing steps in the method, for example, steps S210 and S220.

When the apparatus 10 is configured to perform the method in FIG. 6, the transceiver module 11 may be configured to perform steps of receiving and sending information in the method, for example, steps S310 and S320; and the processing module 12 may be configured to perform processing steps in the method.

When the apparatus 10 is configured to perform the method in FIG. 7, the transceiver module 11 may be configured to perform steps of receiving and sending information in the method, for example, steps S410 and S420; and the processing module 12 may be configured to perform processing steps in the method.

When the apparatus 10 is configured to perform the method in FIG. 8, the transceiver module 11 may be configured to perform a step of receiving and sending information in the method, for example, step S510; and the processing module 12 may be configured to perform processing steps in the method.

When the apparatus 10 is configured to perform the method in FIG. 9, the transceiver module 11 may be configured to perform a step of receiving and sending information in the method, for example, step S610; and the processing module 12 may be configured to perform processing steps in the method.

It should be understood that specific processes in which the units perform the foregoing corresponding steps are described in detail in the foregoing method embodiments. For brevity, details are not described herein again.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described functions. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the terminal device or the network device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiver circuit and a transmitter circuit), and the processing module may be a processing circuit.

FIG. 11 is a diagram of another communication apparatus 20 according to an embodiment of this application. The apparatus 20 includes a processor 21. The processor 21 is configured to execute a computer program or instructions stored in a storage 22, or read data/signaling stored in a storage 22, to perform the methods in the foregoing method embodiments. Optionally, there are one or more processors 21.

Optionally, as shown in FIG. 11, the apparatus 20 further includes the storage 22, and the storage 22 is configured to store the computer program or the instructions and/or the data. The storage 22 and the processor 21 may be integrated together, or may be disposed separately. Optionally, there are one or more storages 22.

Optionally, as shown in FIG. 11, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the storage mentioned in embodiments of this application may be a volatile storage and/or a non-volatile storage. The non-volatile storage may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile storage may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the storage (storage module) may be integrated into the processor.

It should be further noted that the storage described in this specification is intended to include but not limited to these storages and any storage of another proper type.

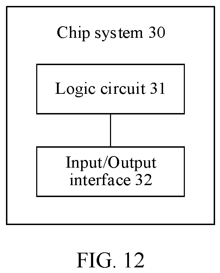

FIG. 12 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the terminal device in the foregoing method embodiments.

For example, the logic circuit 31 is configured to implement processing related operations performed by the terminal device in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions used to implement the method performed by the device in the foregoing method embodiments.

For example, when the computer instructions are executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and network device.

For explanations and beneficial effects of related content of any one of the apparatuses provided above, refer to the corresponding method embodiment provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   determining, by a terminal device, a quantity of AI resources needed for simultaneously running a first artificial intelligence AI model and a second AI model at a first moment, wherein the first AI model is used to determine a first report, and the second AI model is used to determine a second report;
   determining, by the terminal device based on a quantity of available AI resources at the first moment and the quantity of needed AI resources, that the first report is reported at a second moment; and
   reporting, by the terminal device, the first report at the second moment, and reporting the second report at a third moment after the second moment; or
   reporting, by the terminal device, the first report at the second moment, and skipping reporting the second report at the second moment; or
   reporting, by the terminal device, the first report and a third report at the second moment, wherein the third report is determined based on a non-AI model, and the third report is related to the second report.

2. The method according to claim 1, wherein determining, by the terminal device based on the quantity of available AI resources at the first moment and the quantity of needed AI resources, that the first report is reported at the second moment comprises:
   determining, by the terminal device based on the quantity of available AI resources at the first moment and the quantity of needed AI resources, that the first report is reported at the second moment, and determining that the second report cannot be reported at the second moment.

3. The method according to claim 2, wherein when the terminal device reports the first report at the second moment, and reports the second report at the third moment after the second moment, determining, by the terminal device, that the second report cannot be reported at the second moment comprises:
determining, by the terminal device, to report the second report at the third moment after the second moment.

4. The method according to claim 2, wherein when the terminal device reports the first report at the second moment, and skips reporting the second report at the second moment, determining, by the terminal device, that the second report cannot be reported at the second moment comprises:
determining, by the terminal device, not to report the second report at the second moment.

5. The method according to claim 2, wherein when the terminal device reports the first report and the third report at the second moment, determining, by the terminal device, that the second report cannot be reported at the second moment comprises:
determining, by the terminal device, to determine the third report at the first moment based on the non-AI model, and report the third report at the second moment.

6. The method according to any one of claims 2 to 5, wherein determining, by the terminal device based on the quantity of available AI resources at the first moment and the quantity of needed AI resources, that the first report is reported at the second moment, and determining that the second report cannot be reported at the second moment comprises:

determining, by the terminal device based on the quantity of available AI resources at the first moment and the quantity of needed AI resources, that the quantity of available AI resources at the first moment is less than the quantity of needed AI resources, wherein the quantity of needed AI resources is a sum of a first quantity of AI resources needed for the first AI model and a second quantity of AI resources needed for the second AI model;
determining, by the terminal device, that the first quantity of AI resources is less than the second quantity of AI resources, and allocating the first quantity of AI resources in the quantity of available AI resources at the first moment to the first AI model; and
determining, by the terminal device, that the first report corresponding to the first AI model to which the first quantity of AI resources is allocated is reported at the second moment, and determining that the second report corresponding to the second AI model to which the second quantity of AI resources are not allocated cannot be reported at the second moment.

7. The method according to any one of claims 2 to 5, wherein determining, by the terminal device based on the quantity of available AI resources at the first moment and the quantity of needed AI resources, that the first report is reported at the second moment, and determining that the second report cannot be reported at the second moment comprises:

determining, by the terminal device based on the quantity of available AI resources at the first moment and the quantity of needed AI resources, that the quantity of available AI resources at the first moment is less than the quantity of needed AI resources, wherein the quantity of needed AI resources is a sum of a first quantity of AI resources needed for the first AI model and a second quantity of AI resources needed for the second AI model;
determining, by the terminal device, that a priority of the first AI model is higher than a priority of the second AI model, and allocating the first quantity of AI resources in the quantity of available AI resources at the first moment to the first AI model; and
determining, by the terminal device, that the first report corresponding to the first AI model to which the first quantity of AI resources is allocated is reported at the second moment, and determining that the second report corresponding to the second AI model to which the second quantity of AI resources are not allocated cannot be reported at the second moment.

8. The method according to claim 7, wherein before determining, by the terminal device, that the priority of the first AI model is higher than the priority of the second AI model, the method further comprises:
receiving, by the terminal device, first indication information from a network device, wherein the first indication information indicates that the priority of the first AI model is higher than the priority of the second AI model.

9. The method according to any one of claims 1 to 8, wherein the first AI model comprises one or more AI models, and/or the second AI model comprises one or more AI models.

10. The method according to claim 9, wherein when the first AI model comprises a plurality of AI models, the method further comprises:
sending, by the terminal device, first information to the network device, wherein the first information is used to report a quantity of AI resources needed for each of the plurality of AI models and a quantity of AI resources needed for each of at least one AI model combination consisting of the plurality of AI models, and the AI model combination comprises a plurality of AI models.

11. The method according to claim 10, wherein the method further comprises:
sending, by the terminal device, second information to the network device, wherein the second information is used to report a quantity of AI resources needed after any one of the plurality of AI models is updated and a quantity of AI resources needed after an AI model combination comprising the any AI model is updated.

12. The method according to claim 10 or 11, wherein the method further comprises:
sending, by the terminal device, third information to the network device, wherein the third information indicates to adjust a total quantity of available AI resources.

13. The method according to any one of claims 10 to 12, wherein the plurality of AI models correspond to at least one AI function, and the method further comprises:
sending, by the terminal device, fourth information to the network device, wherein the fourth information is used to report a quantity of AI resources needed for each of the at least one AI function.

14. The method according to claim 13, wherein the method further comprises:
sending, by the terminal device, fifth information to the network device, wherein the fifth information is used to report a quantity of AI resources needed after a first AI function in the at least one AI function is updated.

15. The method according to any one of claims 10 to 14, wherein before sending, by the terminal device, the first information to the network device, the method further comprises:

receiving, by the terminal device, the plurality of AI models from the network device; and
determining, by the terminal device, the quantity of AI resources needed for each of the plurality of AI models.

16. The method according to any one of claims 1 to 15, wherein the AI resource comprises a storage resource in an AI processor and/or a computing power resource in the AI processor.

17. A communication method, comprising:

triggering, by a network device, a terminal device to simultaneously run a first artificial intelligence AI model and a second AI model at a first moment, wherein the first AI model is used to determine a first report, and the second AI model is used to determine a second report;
determining, by the network device based on a quantity of AI resources available to the terminal device at the first moment and a quantity of AI resources needed for simultaneously running the first AI model and the second AI model at the first moment, that the terminal device can run the first AI model at the first moment to obtain the first report; and
receiving, by the network device, the first report from the terminal device at a fourth moment, and receiving the second report from the terminal device at a fifth moment after the fourth moment; or
receiving, by the network device, the first report from the terminal device at a fourth moment, and failing to receive the second report from the terminal device; or
receiving, by the network device, the first report and a third report from the terminal device at a fourth moment, wherein the third report is determined based on a non-AI model, and the third report is related to the second report.

18. The method according to claim 17, wherein determining, by the network device based on the quantity of AI resources available to the terminal device at the first moment and the quantity of needed AI resources, that the terminal device can run the first AI model at the first moment to obtain the first report comprises:
determining, by the network device based on the quantity of available AI resources at the first moment and the quantity of needed AI resources, that the terminal device can run the first AI model at the first moment to obtain the first report, and determining that the terminal device cannot run the second AI model at the first moment to obtain the second report.

19. The method according to claim 18, wherein when the network device receives the first report from the terminal device at the fourth moment, and receives the second report from the terminal device at the fifth moment after the fourth moment, determining, by the network device, that the terminal device cannot run the second AI model at the first moment to obtain the second report comprises:
determining, by the network device, that the terminal device runs the second AI model after the first moment to obtain the second report.

20. The method according to claim 18, wherein when the network device receives the first report from the terminal device at the fourth moment, and fails to receive the second report from the terminal device, determining, by the network device, that the terminal device cannot run the second AI model at the first moment to obtain the second report comprises:
determining, by the network device, that the terminal device does not run the second AI model at the first moment.

21. The method according to claim 18, wherein when the network device receives the first report and the third report from the terminal device at the fourth moment, determining, by the network device, that the terminal device cannot run the second AI model at the first moment to obtain the second report comprises:
determining, by the network device, that the terminal device determines the third report at the first moment based on the non-AI model.

22. The method according to any one of claims 17 to 21, wherein the method further comprises:
sending, by the network device, first indication information to the terminal device, wherein the first indication information indicates that a priority of the first AI model is higher than a priority of the second AI model.

23. The method according to any one of claims 17 to 22, wherein the first AI model comprises one or more AI models, and the second AI model comprises one or more AI models.

24. The method according to claim 23, wherein when the first AI model comprises a plurality of AI models, the method further comprises:
receiving, by the network device, first information from the terminal device, wherein the first information is used to report a quantity of AI resources needed for each of the plurality of AI models and a quantity of AI resources needed for each of at least one AI model combination consisting of the plurality of AI models, and the AI model combination comprises a plurality of AI models.

25. The method according to claim 24, wherein the method further comprises:
receiving, by the network device, second information from the terminal device, wherein the second information is used to report a quantity of AI resources needed after any one of the plurality of AI models is updated and a quantity of AI resources needed after an AI model combination comprising the any AI model is updated.

26. The method according to claim 24 or 25, wherein the method further comprises:
receiving, by the network device, third information from the terminal device, wherein the third information indicates to adjust a total quantity of available AI resources.

27. The method according to any one of claims 24 to 26, wherein the plurality of AI models correspond to at least one AI function, and the method further comprises:
sending, by the terminal device, fourth information to the network device, wherein the fourth information is used to report a quantity of AI resources needed for each of the at least one AI function.

28. The method according to claim 27, wherein the method further comprises:
receiving, by the network device, fifth information from the terminal device, wherein the fifth information is used to report a quantity of AI resources needed after a first AI function in the at least one AI function is updated.

29. The method according to any one of claims 24 to 28, wherein the method further comprises:
sending, by the network device, the plurality of AI models to the terminal device.

30. A terminal device, wherein the terminal device comprises a processor and a storage, the processor is coupled to the storage, the storage is configured to store a computer program, and when the processor runs the computer program, the terminal device is enabled to perform the method according to any one of claims 1 to 16.

31. A network device, wherein the network device comprises a processor and a storage, the processor is coupled to the storage, the storage is configured to store a computer program, and when the processor runs the computer program, the network device is enabled to perform the method according to any one of claims 17 to 29.

**32.** A computer-readable storage medium, wherein the computer-readable storage medium stores computer instructions, and when the computer instructions are run on a terminal device, the terminal device is enabled to perform the method according to any one of claims 1 to 16, or when the computer instructions are run on a network device, the network device is enabled to perform the method according to any one of claims 17 to 29.

**33.** A computer program product, comprising instructions, wherein when the computer instructions are run on a terminal device, the terminal device is enabled to perform the method according to any one of claims 1 to 16, or when the computer instructions are run on a network device, the network device is enabled to perform the method according to any one of claims 17 to 29.

**34.** A chip, wherein the chip comprises a processor and a communication interface, the processor reads and runs instructions through the communication interface, and when the chip is installed in a terminal device, the terminal device is enabled to perform the method according to any one of claims 1 to 16, or when the chip is installed in a network device, the network device is enabled to perform the method according to any one of claims 17 to 29.

**35.** A communication system, wherein the communication system comprises a terminal device and a network device, the terminal device is configured to perform the method according to any one of claims 1 to 16, and the network device is configured to perform the method according to any one of claims 17 to 29.

FIG. 1

FIG. 2

FIG. 3

FIG. 4

1 byte

| AI model identifier | Quantity of AI resources needed for an AI model |
|---|---|

FIG. 5

```
Terminal device                          Network device

        |———— S310: First information ————▶|

        |———— S320: Second information ——▶|
```

FIG. 6

```
Terminal device                          Network device

        |———— S410: Fourth information ——▶|

        |———— S420: Fifth information ————▶|
```

FIG. 7

```
Terminal device                          Network device

        |◀— S510: First indication information —|

  S520: Determine
    priorities of
different AI models
```

FIG. 8

| Terminal device | | Network device |

← ─── S610: At least one AI model ───

S620: Evaluate an AI resource occupation status

FIG. 9

— 10

Transceiver module 11

Processing module 12

Storage module 13

FIG. 10

— 20

Processor 21 ─── Transceiver 23

Storage 22

FIG. 11

Chip system 30

Logic circuit 31

Input/Output
interface 32

FIG. 12

**REFERENCES CITED IN THE DESCRIPTION**

**Patent documents cited in the description**

- CN 202310020588

- CN 202310149561